# EUROPÄISCHE PATENTSCHRIFT

(11) **EP 4 299 311 B1**
(45) Veröffentlichungstag und Bekanntmachung des Hinweises auf die Patenterteilung: **27.11.2024**
(21) Anmeldenummer: 22182141.6
(22) Anmeldetag: 30.06.2022
(51) Int. Cl.: B32B 27/18, A61J 1/10, B32B 3/08, B32B 27/08, B32B 27/16, B32B 27/30, B32B 27/32

(54) **FLEXIBLE MEHRSCHICHTFOLIE MIT HOHER KÄLTESCHLAGZÄHIGKEIT FÜR MEDIZINISCHE VERPACKUNGEN**
FLEXIBLE MULTILAYER FILM WITH HIGH LOW-TEMPERATURE IMPACT STRENGTH FOR MEDICAL PACKAGING
FEUILLE MULTICOUCHE SOUPLE À RÉSISTANCE ÉLEVÉE AUX CHOCS À BASSE TEMPÉRATURE POUR EMBALLAGES MÉDICAUX

(43) Veröffentlichungstag der Anmeldung: 03.01.2024
(73) Patentinhaber: PolyCine GmbH, 66578 Schiffsweiler (DE)
(72) Erfinder: HOLZER, Susanne, 66564 Ottweiler (DE); GROß, René, 66538 Neunkirchen (DE); KUNZ, Christian, 66128 Saarbrücken (DE)
(74) Vertreter: Rippel, Hans Christoph

(56) Entgegenhaltungen:
- WO-A1-2020/127227
- DE-A1- 10 361 851
- DE-U1- 20 320 212
- DE-U1- 202013 103 803

## Beschreibung

Die Erfindung betrifft eine flexible, hitzesterilisierbare Mehrschichtfolie auf Basis aliphatischer Polyolefine, die eine besonders gute Schlagzähigkeit bei tieferen Temperaturen aufweist, ein Verfahren zu deren Herstellung, sowie deren Verwendung für medizinische Verpackungen (z.B. für medizinische Lösungen, für pflanzliche, tierische oder menschliche Zellen und organisches Gewebe), bevorzugt eines Beutels für medizinische Lösungen und Blutplasma. Weiterer Gegenstand der Erfindung ist ein Container bzw. Beutel - gegebenenfalls mit Portelementen und/oder Schläuchen - für medizinische Lösungen oder Blutplasma, hergestellt aus der Mehrschichtfolie.

Mehrschichtfolien finden seit vielen Jahren ein breites Anwendungsgebiet, z.B. in der Lebensmittel-Industrie aber auch im medizinisch/pharmazeutischen Bereich beispielsweise als Sekundär-Packmittel (Umverpackung) oder Primär-Packmittel für Lösungsbeutel, Trockenkonzentrate und Medikamente in Tablettenform.

Einige Mehrschichtfolien sind zu flexiblen Verpackungen verarbeitbar, welche beispielsweise als Beutel zum Verpacken und zum Verabreichen von medizinischen Lösungen geeignet sind. Als gängige Praxis findet man derzeit medizinische Lösungen z.B. Infusionslösungen für die parenterale Verabreichung, in flexiblen Einwegbeuteln aus Polyvinylchlorid- (PVC) oder non-PVC-Materialien am Markt.

Diese Beutel müssen neben der Fähigkeit zum Kollabieren, das ein vollständiges Auslaufen des Beutels gewährleistet, weitere Leistungskriterien wie Transparenz, Heißdampfsterilisationsfähigkeit bei 121°C, ausreichende mechanische Festigkeit vor allem bei dynamischer Belastung im Schweißnahtbereich, z.B. beim Zentrifugieren des mit medizinischer Lösung oder insbesondere Blutplasma befüllten Beutels bzw. Beutelsystems bei tiefen Temperaturen, eine aus pharmazeutischer Sicht möglichst geringe Beeinflussung des Beutelinhalts durch die Verpackung aufweisen. Entsprechend den genannten Eigenschaften haben sich Mehrschichtfolien mit einem Schichtaufbau auf Basis von Polyolefinen als vorteilhaft erwiesen.

US-Patent 5,783,269 offenbart hitzesterilisierbare Mehrschichtfilme zur Herstellung von medizinischen Beuteln, enthaltend eine äußere Schicht (2), eine Trägerschicht (4) und eine flexible Mittelschicht (3) und gegebenenfalls eine Heißsiegelschicht (5), wobei alle Schichten Polyolefinhomo- und/oder -copolymere (Erweichungstemperatur: (2) und (4) > 121 °C, (3) < 70°C) enthalten. Beispielhafte 4-lagige Filme sind aufgebaut aus: (2) und (4) PP-Homopolymer, (3) PE- oder PP-Copolymer, (5) PP-Copolymer.

EP-A 0229475 beschreibt eine Mehrschichtfolie für medizinische Behälter, die bevorzugt 3-lagig ist, enthaltend (a) eine erste (= innenliegende) heißsiegelfähige Schicht aus einer Mischung eines (i) Polypropylens, (ii) einem Ethylen-Copolymer und (iii) einem Modifikator wie einem weiteren Ethylen-Copolymer oder einem Elastomer (z.B. EPDM-Terpolymer, SBS-, SEBS-, und SIS-Copolymer); (b) eine zweite (mittlere) Schicht aus einer Mischung von (i) Polyethylen (PE) (50 bis 90 Gew.-%) und (ii) einem Modifikator; und (c) eine dritte (äußere) Schicht aus einer Mischung von (i) Polypropylen und (ii) einem Modifikator. Bevorzugt werden für die äußere Schicht modifizierte PP-Copolymere eingesetzt.

EP-A 0199871 beschreibt eine flexible u.a. dreilagige Mehrschicht-Folie für medizinische Beutel, umfassend: (a) eine (innenliegende) Siegelschicht enthaltend ein (optional modifiziertes) Ethylen-Propylen-Copolymer (Ethylen-Gehalt: 3.8 Gew.-%); (b) eine mittlere Schicht aus einem flexiblen Polymermaterial (z.B. ein elastomeres Co- oder Terpolymer wie EPDM) und (c) eine äußere Schicht enthaltend ein Ethylenpropylen-Copolymer.

DE-A 10361851 und WO 2020/127227 A1 beschreiben eine hitzesterilisierbare 3-lagige Mehrschichtfolie zur Herstellung von medizinischen Beuteln, deren Außenschicht aus mit Impact Modifiern modifiziertem Polypropylen-Homopolymer (mindestens 70 Gew.-%, Beispiel 97 Gew.-%), deren Mittelschicht aus mit Impact Modifiern modifiziertem Polypropylen-Terpolymer, und deren (siegelfähige) Innenschicht aus mit Impact Modifiern modifiziertem Polypropylen-Terpolymer und/oder Polypropylen-Copolymer, besteht. Geeignete Impact-Modifier sind Styrol-Ethylen/Butylen-(SEBS)-, Styrol-Ethylen/Propylen-(SEPS)-Blockcopolymere oder Ethylen/α-Olefin-Copolymere. Die Mittelschicht kann 20 bis 80 Gew.-% PP-Terpolymer, 0 bis 40 Gew.-% Polyethylen-Copolymer, 0 bis 60 Gew.-% SEB- oder SEP-Blockcopolymer enthalten. Beispielhafte Folien weisen eine Mittelschicht aus 75 Gew.-% PP-Terpolymer, 20 Gew.-% SEBS-Blockcopolymer und 5 Gew.-% PE-Plastomer (Ethylen/Octen-Copolymer), und eine Innenschicht aus 85 bzw. 75 Gew.-% PP-Terpolymer, 15 bzw. 20 Gew.-% SEB-Blockcopolymer und 0 bzw. 5 Gew.-% PE-Plastomer auf.

DE 203 20 212 A1 beschreibt eine hitzesterilisierbare 3-lagige Mehrschichtfolie hergestellt durch Coextrusion zur Verwendung für medizinische Beutel. Beispielhafte Folien weisen eine Außenschicht aus 97 Gew.-% Polypropylen-Homopolymer und 3 Gew.-% SEBS-Blockcopolymer, eine Mittelschicht aus 80 Gew.-% EXCELLEN - einem heterophasigen Copolymer auf Basis von Polypropylen und Polyethylen, und 20 Gew.-% SEBS-Blockcopolymer, und eine Innenschicht aus 75 Gew.-% PP-Terpolymer, 20 Gew.-% SEBS-Blockcopolymer und 5 Gew.-% PE-Plastomer auf.

Obwohl mit den bekannten Folien bereits gute Ergebnisse im Hinblick auf Flexibilität, Heißsterilisationsfähigkeit und Transparenz erzielt werden konnten, sind diese Folien insbesondere im Hinblick auf die Schlagzähigkeit bei tieferen Temperaturen, oftmals 4 bis -70°C, insbesondere -18 bis -70 °C, noch verbesserungsbedürftig, und für medizinische Verpackungen, die im Kühlschrank oder Gefrierschrank gelagert werden, nur unzureichend geeignet.

Auf dem Markt befindliche Materialien für Tiefkühlanwendungen sind zum einen Verpackungen (z.B. Beutel) aus reinem Polyethylen (z.B. für Lebensmittel) oder aus Polyvinylchlorid (z.B. für Blutplasma). PE-Beutel, die über eine sehr gute Kälteschlagzähigkeit verfügen, haben den Nachteil, dass sie nicht für eine Heißsterilisation bei 121 °C - wie bei medizinischen Folien erforderlich - geeignet sind. PVC-haltige Materialien werden als gesundheitsschädlich erachtet, da sie üblicherweise Weichmacher enthalten, die oftmals entweichen, so dass man versucht, PVC durch alternative Materialien zu ersetzen.

Die DE 0119469 A2 beschreibt Beutel für medizinische Zwecke, z.B. zur Lagerung von Blut, die mit Rohrstücken, umgeben von einer Verbindungsschicht aus einem EthylenVinylacetat-Copolymer (EVA), versehen sind. Das Beutelmaterial ist u.a. ausgewählt aus Polyethylen (PE), Polypropylen (PP), Poly-n-butylen, Polyisobutylen, vorzugsweise Polyethylen. Das Rohrstück kann u.a. aus Hart-PVC, PP, Polyamid, Polycarbonat, Polyester etc. sein, bevorzugt ist Polycarbonat.

KR 10-1260463 B1 offenbart medizinische PVC-freie Artikel, insbesondere Schläuche (z.B. für Blut), aus einem Polymermaterial basierend auf einem quervernetzten Elastomer auf Polypropylenbasis, insbesondere einem Propylen-C4-C12-Alpha-Olefin-Copolymer, enthaltend ferner ein Styrol-basiertes Elastomer (u.a. SEBS, SEPS). Die Schläuche können eine 3-lagige Struktur haben.

KR 10-0812353 B1 beschreibt non-PVC Dichtungselemente bzw. Schlauchansatzstücke aus Olefinen für Blutbeutel. Die Blutbeutelfolie (Dicke 150 bis 300 µm) hat eine Dicke von 150 bis 300 und weist 3 Schichten unterschiedlicher Härte, vorzugsweise aus einem Ethylen-Alpha-Olefin-Copolymer, einem Propylen-Ethylen-Copolymer und einem Polypropylenharz, auf.

US 5,026,347 offenbart Beutel für Blutplasma auf Basis von Polyolefinen, insbesondere einer Mischung enthaltend ein Kraton G-Blockcopolymer (z.B. SEBS, 55 bis 65 Gew.-%), Polypropylen (20 bis 30 Gew.-%) und einen Citratester.

US 2014/0091047 A1 und US 2015/0190309 A1 beschreiben Beutel für Blutplasma, die aus einem PVC- oder non-PVC-Material (wie z.B. PP, PE, ULDPE, VLDPE) hergestellt sind. Ferner können auch Mischungen mit EVA und Blockcopolymeren wie Kraton^{®} als Beutelmaterial verwendet werden. Die Beutel können aus mehreren Schichten aufgebaut sein. Zur Heißdampfsterilisation ist insbesondere ein PP-Homo- oder PP-Copolymer, vorzugsweise ein statistisches PP-Copolymer, geeignet, das mit einem Anteil von mindestens 30 Gew.-% in mindestens einer Schicht enthalten sein soll, oder alternativ ein vernetztes EVA. Zur Strahlensterilisation sind Polymere auf Basis von 30 % Ethylen geeignet oder mit Elastomeren wie Kraton modifizierte Propylenhomo- oder copolymere. Zur Erhöhung der Flexibilität und Zähigkeit soll bevorzugt in mindestens einer Schicht ein Elastomer (z.B. ULDPE, VLDPE, EVA oder Styrol Butadien-Terpolymere (Kraton) enthalten sein. In den Beispielen (US 2014/0091047 A1) werden Beutel auf Basis von PP-Copolymeren und eines Polyolefin-EVA-Blends zur Lagerung von Blutplasma verwendet.

Die nicht-vorveröffentlichte Patentanmeldung PCT/EP2022/055728 offenbart eine hitzesterilisierbare 3-lagige Mehrschichtfolie mit hoher Kälteschlagzähigkeit zur Herstellung von medizinischen Beuteln, deren Außenschicht aus mit Impact Modifiern modifiziertem Polypropylen-Homopolymer ist, deren Mittelschicht aus 40 bis 65 Gew.-% eines heterophasischem Propylen-Ethylen-Copolymers (C2C3-HeCo), 20 bis 30 Gew.-% eines Styrol-Blockcopolymer-Elastomers (SBC-E) und 15 bis 30 Gew.-% eines Ethylen-C4-C8-alpha-Olefin-Copolymer-Elastomers ist, und deren Innenschicht aus 51 bis 68 Gew.-% eines Polypropylen-Terpolymers, 12 bis 22 Gew.-% SBC-E, und 15 bis 35 Gew.-% C2C3-HeCo ist.

Beispielhafte 3-lagige Folien weisen eine Mittelschicht aus 55 Gew.-% C2C3-HeCo, 25 Gew.-% SEBS-Blockcopolymer und 20 Gew.-% Ethylen/Octen-Copolymer, und eine Innenschicht aus 65 Gew.-% PP-Terpolymer, 15 Gew.-% SEBS und 20 Gew.-% C2C3-HeCo auf.

Die vorgenannten Kunststoff-Folien und daraus hergestellte Beutel sind als Verpackungsmaterial für Tiefkühlanwendungen (z.B. Lagerung von medizinischen Lösungen und Blutplasma, sowie von Zellen und organischen Geweben) noch verbesserungsbedürftig. Die Konservierung von Zellen und organischen Geweben erfolgt oftmals durch Kryokonservierung bei einer Temperatur von bis zu -196°C. Die Konservierung von Blutplasma stellt auch ganz besondere Ansprüche an das verwendete Kunststoff-Verpackungsmaterial, denn es dürfen keine schädlichen Substanzen (wie z.B. Weichmacher) freigesetzt werden, es darf keinen nachteiligen Einfluss auf die plasmatischen und zellulären Substanzen der Blutes wie z.B. Erythrozyten, Thrombozyten und Leukozyten haben, es darf ferner keine Substanzen aus dem Blut elimieren/adsorbieren und muss gegen das Eindringen von Mikroorganismen dicht sein. Darüber hinaus soll es möglich sein, Blutplasma - möglichst über mehrere Jahre - zu lagern, wozu Temperaturen von ≤ -65°C erforderlich sind.

Ein weiterer Nachteil des vorgenannten Standes der Technik ist es, dass oftmals auch die Fähigkeit des Beutels zu kollabieren, um eine komplette Entleerung zu gewährleisten, nicht ausreicht.

Aufgabe der Erfindung ist es daher, eine Mehrschichtfolie für medizinische Verpackungen, die eine besonders gute Kälteschlagzähigkeit erfordern, bereitzustellen, die bzw. aus dieser hergestellte Verpackungen die zuvor genannten Nachteile nicht aufweist und für Tiefkühlanwendungen wie beispielsweise der Lagerung/Kryokonservierung von medizinischen Lösungen, Blutplasma, Zellen oder organischem Gewebe, insbesondere von Blutplasma, geeignet ist. Ferner soll die Mehrschichtfolie bzw. aus dieser hergestellte Verpackungen Eigenschaften wie hohe Transparenz, Heißdampfsterilisationsfähigkeit bei 121°C, ausreichende mechanische Festigkeit vor allem bei dynamischer Belastung im Schweißnahtbereich, z.B. beim Zentrifugieren der mit medizinischem Material befüllten Verpackung bei tieferen Temperaturen (z.B. im gekühlten Zustand) beibehalten. Aus der Mehrschichtfolie hergestellte Beutel sollten zum Kollabieren fähig sein, d.h. z.B. mit medizinischen Lösungen oder Blutplasma befüllte Beutel sollten vollständig entleerbar sein.

Eine weitere Aufgabe der Erfindung ist es, ein Verfahren zur Herstellung der hitzesterilisierbaren Mehrschichtfolie, sowie einen Container, insbesondere einen Beutel, für medizinische Lösungen, Blutplasma, Zellen oder organisches Gewebe, insbesondere Blutplasma, hergestellt aus der Mehrschichtfolie, sowie einen Beutel mit eingeschweißten Portelementen und/oder Schläuchen für medizinische Lösungen oder Blutplasma, der den vorgenannten Kriterien genügt, und ein Verfahren zu dessen Herstellung, bereitzustellen.

Ein Gegenstand der Erfindung ist eine hitzesterilisierbare Mehrschichtfolie, umfassend (bestehend aus)
a) eine erste Polymerschicht (A) enthaltend (bestehend aus) mindestens ein, vorzugsweise ein, mit mindestens einem, vorzugsweise einem, Impact Modifier modifiziertes Polypropylen-Homopolymer;
b) eine zweite Polymerschicht (B) enthaltend (bestehend aus):
   B1) 15 bis 45 Gew.-%, bevorzugt 17 bis 35 Gew.-%, besonders bevorzugt 19 bis 30 Gew.-%, - bezogen auf (B) - mindestens einer, vorzugsweise einer, Komponente B1) ausgewählt aus der Gruppe bestehend aus: Polypropylen-Terpolymeren und Polyethylen-Elastomeren, welche Copolymere von Ethylen und einem alpha-Olefin enthaltend 4 bis 12 Kohlenstoffatome sind;
   B2) 20 bis 30 Gew.-%, bevorzugt 22 bis 28 Gew.-%, besonders bevorzugt 23 bis 27 Gew.-%, - bezogen auf (B) - mindestens eines Styrol-Blockcopolymer (SBC)-Elastomers;
   B3) 20 bis 40 Gew.-%, bevorzugt 25 bis 35 Gew.-%, besonders bevorzugt 27 bis 33 Gew.-%, - bezogen auf (B) - mindestens eines Propylen-Ethylen-(Block)Copolymers, worin - bezogen auf (B3) - der Anteil der Struktureinheiten von Ethylen ≥ 9 Gew.-%, oft 9 bis 15 Gew.-%, bevorzugt ≥ 10 Gew.-%;
   B4) 15 bis 30 Gew.-%, bevorzugt 18 bis 28 Gew.-%, besonders bevorzugt 19 bis 26 Gew.-%, - bezogen auf (B) - mindestens einer, vorzugsweise einer, Komponente B4) ausgewählt aus der Gruppe bestehend aus: Polybuten-1-Plastomeren und Polyethylen-Composites mit einer Schmelztemperatur von > 125°C und einer Dichte von 945 bis 960 kg/m³; und
c) eine mittlere Polymerschicht (C), die sich zwischen der ersten Polymerschicht (A) und der zweiten Polymerschicht (B) befindet, enthaltend (bestehend aus):
   C1) 20 bis 40 Gew.-%, bevorzugt 25 bis 40 Gew.-%, besonders bevorzugt 30 bis 38 Gew.-%, - bezogen auf (C) - mindestens eines Styrol-Blockcopolymer (SBC) Elastomers;
   C2) 15 bis 30 Gew.-%, bevorzugt 18 bis 30 Gew.-%, besonders bevorzugt 20 bis 28 Gew.-% - bezogen auf (C) - mindestens eines Polyethylen-Elastomers, welches ein Copolymer von Ethylen mit einem alpha-Olefin enthaltend 4 bis 12 Kohlenstoffatome ist;
   C3) 25 bis 50 Gew.-%, bevorzugt 25 bis 45 Gew.-%, besonders bevorzugt 25 bis 39 Gew.-%, - bezogen auf (C) - mindestens eines Propylen-Ethylen-(Block)Copolymers, worin - bezogen auf (C3) - der Anteil der Struktureinheiten von Ethylen ≥ 9 Gew.-%, oft 9 bis 15 Gew.-%, bevorzugt ≥ 10 Gew.-%, beträgt; und
   C4) 0 bis 20 Gew.-%, bevorzugt 1 bis 15 Gew.-%, besonders bevorzugt 3 bis 12 Gew.-%, - bezogen auf (C) - mindestens einer, vorzugsweise einer, Komponente C4) ausgewählt aus der Gruppe bestehend aus: Polypropylen-Terpolymeren, statistischen Propylen-Ethylen-Copolymeren und Polybuten-1 Plastomeren.

Die in Gewichtsprozent (Gew.-%) angegebenen Anteile ergeben jeweils zusammen 100 Gew.-%.

Falls Komponente C4) vorhanden ist, beträgt deren Anteil mindestens 1 Gew.-%, bevorzugt mindestens 3 Gew.-%, jeweils bezogen auf die mittlere Polymerschicht (C).

Im Sinne der vorliegenden Erfindung sind unter den Struktureinheiten eines Monomers in einem (Co)Polymer die von dem einpolymerisierten Monomer abgeleiteten Struktureinheiten zu verstehen.

Der Begriff "hitzesterilisierbar" bedeutet, dass entsprechende Materialien einer Sterilisation bei erhöhten Temperaturen, vorzugsweise einer Dampfsterilisation unterzogen werden können. Mit der Sterilisation bezeichnet man Verfahren, durch die Materialien und Gegenstände von lebenden Mikroorganismen befreit werden. Den damit erreichten Zustand der Materialien und Gegenstände bezeichnet man als "steril". Bei der Dampfsterilisation der befüllten oder unbefüllten medizinischen Verpackungen verwendet man heißen Wasserdampf zur Sterilisation, welche typischerweise in einem Autoklaven durchgeführt wird. Dabei werden die medizinischen Verpackungen vorzugsweise 20 Minuten auf 121 °C bei 2 bar Druck im Wasserdampf erhitzt. Die Luft im Inneren des Autoklaven wird dabei vollständig durch Wasserdampf ersetzt. Bei der Verwendung der medizinischen Verpackung für Blutplasma, Zellen oder organisches Gewebe wird nur die nicht befüllte Verpackung einer Heiß-Dampfsterilisation wie zuvor beschrieben unterzogen.

Der Begriff "Mehrschichtfolie" bezieht sich auf thermoplastische Materialien in mehreren coextrudierten Polymerschichten, die miteinander zu einer Folie in Form einer laufenden Bahn oder eines Schlauchs verbunden sind.

Der Begriff "Impact Modifier" bezeichnet polymere Materialien, wie z.B. Styrol-Blockcopolymer Elastomere, Polyethylen-Elastomere und Polypropylen-Elastomere, die durch Einmischung im Schmelzezustand die Schlagzähigkeit des den Impact Modifier umgebenden Polymers verbessern.

Der Begriff "Schlagzähigkeit" bezeichnet die Eigenschaft eines Werkstoffes einer dynamischen Belastung zu wiederstehen. Nach der Norm DIN EN ISO 180:2013-08 kann die Izod-Schlagzähigkeit von Kunststoffen unter festgelegten Bedingungen gemessen werden.

Nach der Norm DIN EN ISO 8570:1991-08 ("Kunststoffe; Folien und Bahnen; Bestimmung der Kältebruchtemperatur") kann die Kältebruchtemperatur von Folien bestimmt werden.

Der Begriff "Composite" steht für eine homogene Zusammensetzung bzw. ein Verbundmaterial.

### Erste Polymerschicht (A)

Die erste Polymerschicht (A) der erfindungsgemäßen Mehrschichtfolie stellt definitionsgemäß die Polymerschicht dar, welche bei Verarbeitung der Folie zu einer Verpackung, welche vorzugsweise ein Beutel ist, auf der Außenseite der Verpackung befindlich ist. Demnach ist sie bei der Weiterverarbeitung der Folie zu Verpackungen im direkten Kontakt mit der Oberfläche des Schweißwerkzeuges und benötigt deshalb vorzugsweise eine hohe Schmelz- bzw. Erweichungstemperatur, die bevorzugt oberhalb von 125°C, besonders bevorzugt zwischen 127°C und 150°C, ganz besonders bevorzugt zwischen 130°C und 145°C liegt.

Die erste Polymerschicht (A) enthält mindestens ein, vorzugsweise ein, Polypropylen-Homopolymer, welches mit mindestens einem, vorzugsweise einem, Impact Modifier modifiziert ist.

Bevorzugt besteht die erste Polymerschicht (A) aus mindestens einem, vorzugsweise einem, Polypropylen-Homopolymer, welches mit mindestens einem, vorzugsweise einem, Impact Modifier modifiziert ist.

Die erste Polymerschicht (A) enthält (oder besteht aus) mindestens ein, vorzugsweise ein, Polypropylen-Homopolymer, welches zur Verbesserung der (Kälte)Schlagzähigkeit generell mit mit 5 bis 20 Gew.-%, besonders bevorzugt 5 bis 15 Gew.-%, insbesondere 7 bis 12 Gew.-%, mindestens eines Impact Modifiers modifiziert ist.

Die Herstellung von Polypropylen-Homopolymeren ist bekannt. Ferner sind Polypropylen-Homopolymere kommerziell erhältlich z.B. von Lyondell Basell Corporation, USA.

Bevorzugt enthält (oder besteht aus) die erste Polymerschicht (A) ein Polypropylen-Homopolymer, welches mit mindestens einem Impact Modifier ausgewählt aus der Gruppe bestehend aus: Styrol-Blockcopolymeren, wie z.B. Styrol-Ethylen-Butylen-Styrol-Blockcopolymere (SEBS), Styrol-Ethylen-Propylen-Styrol-Blockcopolymer (SEPS), Styrol-Isopren-Styrol-Blockcopolymer (SIS), und Styrol-Butadien-Styrol-Blockcopolymer (SBS), bevorzugt SEBS und SEPS, insbesondere SEBS, und/oder Polyethylen-Elastomeren, wie z.B. Copolymeren von Ethylen mit mindestens einem alpha-Olefin enthaltend 4 bis 16, bevorzugt 4 bis 12, besonders bevorzugt 4 bis 8, Kohlenstoffatome, ganz besonders bevorzugt Ethylen-Butylen-Copolymeren und/oder Ethylen-Octen-Copolymeren, modifiziert ist.

Besonders bevorzugt enthält (oder besteht aus) die erste Polymerschicht (A) 80 bis 95 Gew.-%, insbesondere 85 bis 95 Gew.-%, eines Polypropylen-Homopolymers und 5 bis 20 Gew.-%, insbesondere 5 bis 15 Gew.-%, eines Styrol-Blockcopolymers und/oder eines Copolymers von Ethylen mit mindestens einem alpha-Olefin enthaltend 4 bis 12, bevorzugt 4 bis 8, Kohlenstoffatome.

In einer bevorzugten Ausführungsform enthält (oder besteht aus) die erste Polymerschicht (A) 85 bis 95 Gew.-%, bevorzugt 88 bis 93 Gew.-%, eines Polypropylen-Homopolymers und 5 bis 15 Gew.-%, bevorzugt 7 bis 12 Gew.-%, eines Styrol-Ethylen/Butylen-Blockcopolymers.

Die Gewichtsangaben für die Komponenten der ersten Polymerschicht (A) beziehen sich auf das Gesamtgewicht der ersten Polymerschicht (A).

### Zweite Polymerschicht (B)

Die zweite Polymerschicht (B) stellt definitionsgemäß die Polymerschicht dar, welche bei Verarbeitung der erfindungsgemäßen Mehrschichtfolie zu einer Verpackung, welche vorzugsweise ein Beutel ist, auf der Innenseite der Verpackung befindlich ist. Diese Polymerschicht ist dafür zuständig, dass die Verpackung durch Verschweißen dicht verschlossen werden kann. Die zweite Polymerschicht (B) der Folie muss mit sich selbst und mit entsprechend eingelegten Portelementen sicher und mit möglichst geringer Temperatur und Schweißzeit verschweißbar und trotzdem bei Temperaturen von mehr als 121°C hitzesterilisierbar sein. Eine niedrige Schweißtemperatur ist besonders wichtig, um die Folienstruktur möglichst wenig mit Gefügespannungen zu belasten. Demnach liegt die Schmelz- bzw. Erweichungstemperatur der zweiten Polymerschicht (B) im Allgemeinen oberhalb von 121°C, bevorzugt bei 122°C bis 135°C, besonders bevorzugt bei 124°C bis 130°C, in jedem Fall aber unterhalb der Schmelz- bzw. Erweichungstemperatur der ersten Polymerschicht (A).

Die zweite Polymerschicht (B) der erfindungsgemäßen Mehrschichtfolie enthält (oder besteht aus)
die Komponenten B1), B2), B3) und B4) in folgenden Anteilen (jeweils bezogen auf (B)):
B1) 15 bis 45 Gew.-%, bevorzugt 17 bis 35 Gew.-%, besonders bevorzugt 19 bis 30 Gew.-%;
B2) 20 bis 30 Gew.-%, bevorzugt 22 bis 28 Gew.-%, besonders bevorzugt 23 bis 27 Gew.-%;
B3) 20 bis 40 Gew.-%, bevorzugt 25 bis 35 Gew.-%, besonders bevorzugt 27 bis 33 Gew.-%;
B4) 15 bis 30 Gew.-%, bevorzugt 18 bis 28 Gew.-%, besonders bevorzugt 19 bis 26 Gew.-%.

Die Komponenten (B2) und (B3) fungieren als Impact Modifier und sorgen für eine Verbesserung der Schlagzähigkeit der zweiten Polymerschicht (B), besonders bei tiefen Temperaturen. Die zweite Polymerschicht (B) der erfindungsgemäßen Mehrschichtfolie weist, insbesondere durch Komponente (B4), eine raue Oberfläche auf, so dass bei Verwendung der erfindungsgemäßen Mehrschichtfolie als Beutel, wobei die (Innen)-Schicht (B) Kontakt mit zum Beispiel medizinischen Lösungen oder Blutplasma hat, eine komplette Entleerung des Beutels gewährleistet ist.

### Komponente B1)

Die mindestens eine, vorzugsweise eine, Komponente B1) ist ausgewählt aus der Gruppe bestehend aus: Polypropylen-Terpolymeren und Polyethylen-Elastomeren, welche Copolymere von Ethylen und einem alpha-Olefin enthaltend 4 bis 12 Kohlenstoffatome sind.

Der Begriff "Terpolymer" kennzeichnet ein Copolymer, welches aus drei verschiedenen Monomeren hergestellt ist.

Der Begriff "Polypropylen-Terpolymer" bezeichnet eine mit zwei zusätzlichen CoMonomeren im Polymerisationsprozess modifizierte Polypropylen-Molekülkette. Bevorzugte zusätzliche Co-Monomere sind Ethylen und/oder mindestens ein C₄-C₁₂ α-Olefin, bevorzugt Ethylen und ein C₄-C₁₂ α-Olefin, besonders bevorzugt Ethylen und ein C₄-C₈ α-Olefin, ganz besonders bevorzugt Ethylen und 1-Buten.

Besonders bevorzugt ist das als Komponente B1) eingesetzte Polypropylen-Terpolymer mindestens ein, bevorzugt ein, Terpolymer von Propylen, Ethylen und einem C₄-C₁₂ α-Olefin, worin der Anteil von Ethylen vorzugsweise 1 bis 4 Gew.-% und der Anteil des C₄-C₁₂ α-Olefins, bevorzugt C₄-C₈ α-Olefins, insbesondere 1-Buten, vorzugsweise 9 bis 12 Gew.-%, beträgt, jeweils bezogen auf das Terpolymer.

Die Gewichtsanteile beziehen sich jeweils auf die einpolymerisierten Struktureinheiten der Monomere in das Terpolymer.

Ganz besonders bevorzugt ist das Polypropylen-Terpolymer aufgebaut aus Struktureinheiten von Propylen, Ethylen und Butylen.

Die Monomere sind in dem Polypropylen-Terpolymer im Allgemeinen statistisch eingebaut, d.h. das als Komponente B1) eingesetzte Polypropylen-Terpolymer ist üblicherweise ein statistisches Polypropylen-Terpolymer.

Bevorzugt ist das als Komponente B1) eingesetzte Polyethylen-Elastomer mindestens ein, vorzugsweise ein, Polyethylen-Elastomer, welches ein Copolymer von Ethylen mit einem alpha-Olefin enthaltend 4 bis 8 Kohlenstoffatome ist.

Der Anteil der Struktureinheiten des alpha-Olefins - bezogen auf das Elastomer - beträgt bevorzugt 20 bis 30 Gew.-%.

Besonders bevorzugt ist das als Komponente B1) eingesetzte Polyethylen-Elastomer ein Ethylen-Butylen-Copolymer und/oder ein Ethylen-1-Octen-Copolymer, insbesondere ein Ethylen-1-Octen-Copolymer.

### Komponente B2)

Komponente B2) ist mindestens ein, bevorzugt ein, Styrol-Blockcopolymer (SBC) Elastomer.
Der Begriff "Styrol-Blockcopolymer Elastomer" bezeichnet synthetische thermoplastische Elastomere auf Basis von Styrol-Blockcopolymeren zur Schlagzähmodifikation von Polypropylen.

Das mindestens eine Styrol-Blockcopolymer (SBC) Elastomer B2) ist bevorzugt ausgewählt aus der Gruppe bestehend aus: Styrol-Ethylen-Butylen-Styrol-Blockcopolymer (SEBS), Styrol-Ethylen-Propylen-Styrol-Blockcopolymer (SEPS), Styrol-Ethylen-Ethylen-Propylen-Styrol-Blockcopolymer (SEEPS), Styrol-Isopren-Styrol-Blockcopolymer (SIS) und Styrol-Butadien-Styrol-Blockcopolymer (SBS), und besonders bevorzugt SEBS und SEPS, insbesondere SEBS.

Es ist auch möglich das Styrol-Blockcopolymer (SBC) Elastomer teilweise durch ein oder mehrere thermoplastische Elastomere auf Olefinbasis (TPE-O) zu ersetzen (Anteil TPE-O: maximal 45 Gew.-%, bevorzugt 20 bis 30 Gew.-%).

Bevorzugt ist Komponente B2) ein Styrol-Blockcopolymer (SBC) Elastomer, welches keine Anteile eines thermoplastischen Elastomers auf Olefinbasis enthält.

### Komponente B3)

Komponente B3) ist mindestens ein, vorzugsweise ein, Propylen-Ethylen-(Block)Copolymer, worin - bezogen auf (B3) - der Anteil der Struktureinheiten von Ethylen ≥ 9 Gew.-%, oft 9 bis 15 Gew.-%, bevorzugt ≥ 10 Gew.-%, oft bevorzugt 10 bis 12 Gew.-%, beträgt.

Propylen-Ethylen-Copolymere B3) werden oftmals auch als "heterophasische" Copolymere bezeichnet. Im Allgemeinen ist das Propylen-Ethylen-Copolymer B3) ein Propylen-Ethylen-Blockcopolymer, welches Ethylen- und Propylen-Polymerblöcke aufweist und dadurch bedingt eine heterogene Phase (Morphologie) ausbildet.

Heterophasische Propylen-Ethylen-(Block)Copolymere B3) unterscheiden sich sowohl in ihrer Zusammensetzung (Anteil der Ethylen-Struktureinheiten ≥ 9 Gew.-%) als auch in ihren Eigenschaften von Propylen-Ethylen-Copolymeren mit statistischer Verteilung der beiden Monomeren, worin der Anteil der Struktureinheiten von Ethylen im Allgemeinen maximal 8 Gew.-%, oftmals maximal 5 Gew.-% beträgt. Derartige statistische Propylen-Ethylen-Copolymere bilden üblicherweise eine homogene Phase (Morphologie) aus.

### Komponente B4)

Die mindestens eine, vorzugsweise eine, Komponente B4) ist ausgewählt aus der Gruppe bestehend aus: Polybuten-1-Plastomeren und Polyethylen-Composites mit einer Schmelztemperatur von > 125°C und einer Dichte von 945 bis 960 kg/m³.

Das als Komponente B4) eingesetzte Polybuten-1-Plastomer basiert auf einem Polybuten-1-Homopolymer und/oder einem Polybuten-1-Copolymer.

Geeignete Polybuten-1-Plastomere sind kommerziell - z.B. von LyondellBasell als Koattro KT MR05, Toppyl PB 8640M, oder Purell^{®} KT MR07, oder von Mitsui als Tafmer BL 2481M - erhältlich.

Das als Komponente B4) eingesetzte Polyethylen-Composite ist mindestens ein, vorzugsweise ein, Polyethylen-Composite mit einer Schmelztemperatur von > 125°C und einer Dichte von 945 bis 960 kg/m³.

Das als Komponente B4) eingesetzte Polyethylen-Composite besteht im Allgemeinen aus:
65 bis 85 Gew.-% - bezogen auf Composite - Ethylen-Homopolymer, und
15 bis 35 Gew.-%, bevorzugt 20 bis 30 Gew.-%, - bezogen auf Composite - mindestens eines, vorzugsweise eines, Ethylen-Copolymers, welches als Comonomer mindestens ein, vorzugsweise ein, alpha-Olefin mit 4 bis 12, bevorzugt 4 bis 8, besonders bevorzugt 4 bis 6 Kohlenstoffatomen, ganz besonders bevorzugt ausgewählt aus 1-Buten, 1-Penten, 1-Hexen und 4-Methyl-1-penten, vorzugsweise 1-Buten, enthält.

Das als Komponente B4) eingesetzte Polyethylen-Composite weist eine Schmelztemperatur von > 125°C, vorzugsweise von 130 bis 135°C, und eine Dichte von 945 bis 960 kg/m³ auf.

Das in dem Polyethylen-Composite enthaltene mindestens eine, vorzugsweise eine, Ethylen-Copolymer enthält neben dem alpha-Olefin mit 4 bis 12 Kohlenstoffatomen keine weiteren Comonomere.

Der Anteil des alpha-Olefin-Comonomers - bezogen auf Ethylen-Copolymer - beträgt im Allgemeinen 25 bis 40 Gew.-%, bevorzugt 30 bis 37 Gew.-%; der Ethylen-Anteil - bezogen auf Ethylen-Copolymer - beträgt entsprechend 60 bis 75 Gew.-%, bevorzugt 63 bis 70 Gew.-%. Die Gewichtsanteile beziehen sich jeweils auf die einpolymerisierten Struktureinheiten der Monomere in das Ethylen-Copolymer.

Bevorzugt besteht das als Komponente B4) eingesetzte Polyethylen-Composite aus: 70 bis 80 Gew.-% - bezogen auf Composite - Ethylen-Homopolymer, und 20 bis 30 Gew.-% - bezogen auf Composite - mindestens eines, vorzugsweise eines, Ethylen-Copolymers, welches als Comonomer mindestens ein, vorzugsweise ein, alpha-Olefin ausgewählt aus 1-Buten, 1-Penten, 1-Hexen und 4-Methyl-1-penten, vorzugsweise 1-Buten, enthält.

Besonders bevorzugt besteht das als Komponente B4) eingesetzte Polyethylen-Composite aus:
70 bis 80 Gew.-% - bezogen auf Composite- Ethylen-Homopolymer, und
20 bis 30 Gew.-% - bezogen auf Composite - Ethylen-1-Buten-Copolymer,
worin der Anteil 1-Buten - bezogen auf Ethylen-1-Buten-Copolymer - 25 bis 40 Gew.-%, bevorzugt 30 bis 37 Gew.-%, beträgt.

Das als Komponente B4) eingesetzte Polyethylen-Composite enthält als Ethylen-Homopolymer im Allgemeinen ein High-Density-Polyethylen (HDPE), vorzugsweise ein HDPE mit einer Dichte von 950 bis 970 kg/m³.

Die Herstellung von HDPE ist dem Fachmann bekannt.

Ferner ist HDPE kommerziell erhältlich; HDPE mit einer Dichte von 950 bis 970 kg/m³ ist z.B. von Tosoh Co., Ltd. als Nipolon^{®} P FY13 oder von Borealis als Bormed^{®} HE2581-PH und Bormed HE7541-PH erhältlich.

Das mindestens eine in dem Polyethylen-Composite enthaltene Ethylen-Copolymer wird üblicherweise durch Copolymerisation von Ethylen und dem alpha-Olefin-Comonomer mittels eines Metallocen-Katalysators hergestellt.

Geeignete Metallocen-Katalysatoren sind organische Verbindungen eines Übergangsmetalls mit mehreren (Anzahl entsprechend der Wertigkeit des Übergangsmetalls) - mit dem Übergangsmetall koordinierten - Liganden, wovon mindestens ein Ligand ein Cyclopentadienylrest ist. Das Übergangsmetall ist bevorzugt ausgewählt aus der Gruppe bestehend aus Zr, Ti, Hf, V, Nb, Tn und Cr, besonders bevorzugt ist Zr oder Hf, ganz besonders bevorzugt Zr.

Bevorzugt ist ein Zr oder Hf-Metallocen-Katalysator mit zwei Cyclopentadienylresten.

Besonders bevorzugt ist der Metallocen-Katalysator Bis(n-butyl-cylopentadienyl)-zirkoniumdichlorid.

Zur Herstellung des mindestens einen Ethylen-Copolymers werden die vorgenannten Metallocen-Katalysatoren als ionische Komplexverbindungen eingesetzt, die durch Umsetzung des Metallocen-Katalysators mit organisch modifizierter Tonerde erhalten werden können. Als Tonerde können alle üblichen Tonmaterialien eingesetzt werden, bevorzugt sind Hektorit, Smektit, und Montmorillonit.

Die organisch modifizierte Tonerde wird durch Umsetzung von Tonerde mit einem aliphatischen Salz erhalten. Beispiele für ein solches aliphatisches Salz sind N,N-Dimethyldecylaminhydrochlorid, N,N-Dimethyldodecylaminhydrochlorid, N,N-Dimethyltetradecylaminhydrochlorid, N,N-Dimethylhexadecylaminhydrochlorid, N,N-Dimethyl-Octadodecylamin-Hydrochlorid, N,N-Dimethyl-Behenylamin-Hydrochlorid, N,N-Dimethyl-Behenylamin-Hydrofluorid, N,N-Dimethyl-Behenylaminhydrobromid und N, N-Dimethyl-Behenylamin-Hydroiodid, bevorzugt ist N,N-Dimethyl-Behenylamin-Hydrochlorid.

Vorzugsweise wird zur Herstellung des Ethylen-Copolymers noch eine Organoaluminiumverbindung, vorzugsweise Triisobutylaluminium, als Co-Katalysator eingesetzt.

Die Herstellung des Ethylen-Copolymers kann in Gegenwart des Metallocen-Katalysators zum Beispiel durch ein Aufschlämmverfahren, ein Lösungsverfahren oder in der Gasphase erfolgen.

Die Herstellung von Ethylen-alpha-Olefin-Copolymeren mittels eines solchen Metallocen-Katalysators ist zum Beispiel in JP-A 2019/111805 und JP-A 2019/167430 beschrieben.

Das als Komponente B4) eingesetzte Polyethylen-Composite enthält ein Ethylen-Copolymer hoher Dichte; bevorzugt weist das Ethylen-Copolymer eine Dichte von 945 bis 960 kg/m³ auf.

Komponente B4) dient zur Erzeugung einer rauen Oberfläche der (Innen)schicht bzw. der zweiten Polymerschicht (B) der erfindungsgemäßen Mehrschichtfolie, wodurch eine komplette Entleerung eines daraus hergestellten - z.B. mit medizinischen Lösungen oder Blutplasma befüllten - Beutels gewährleistet ist.

Gemäß einer bevorzugten Ausführungsform enthält (oder besteht aus) die zweite Polymerschicht (B) der erfindungsgemäßen Mehrschichtfolie: ein Polypropylen-Terpolymer (als Komponente B1) aufgebaut aus Struktureinheiten von Propylen, Ethylen und Butylen, ein Styrol-Ethylen-Butylen-Styrol-Blockcopolymer (SEBS) (als Komponente B2), ein Propylen-Ethylen-(Block)Copolymer Propylen-Ethylen-(Block)Copolymer, worin der Anteil der Struktureinheiten von Ethylen ≥ 10 Gew.-% beträgt (als Komponente B3), und ein Polybuten-1-Plastomer (als Komponente B4).

Besonders bevorzugt enthält (oder besteht aus) die zweite Polymerschicht (B) gemäß der vorgenannten Ausführungsform:
B1) 17 bis 35 Gew.-%, bevorzugt 19 bis 30 Gew.-%, eines Polypropylen-Terpolymers aufgebaut aus Struktureinheiten von Propylen, Ethylen und Butylen;
B2) 22 bis 28 Gew.-%, bevorzugt 23 bis 27 Gew.-%, eines Styrol-Ethylen-Butylen-Styrol-Blockcopolymers (SEBS);
B3) 25 bis 35 Gew.-%, bevorzugt 27 bis 33 Gew.-%, eines Propylen-Ethylen-(Block)Copolymers; und
B4) 18 bis 28 Gew.-%, bevorzugt 19 bis 26 Gew.-%, eines Polybuten-1-Plastomers.

Gemäß einer weiteren bevorzugten Ausführungsform enthält (oder besteht aus) die zweite Polymerschicht (B) der erfindungsgemäßen Mehrschichtfolie: ein Ethylen-1-Octen-Copolymer (als Komponente B1), ein Styrol-Ethylen-Butylen-Styrol-Blockcopolymer (SEBS) (als Komponente B2), ein Propylen-Ethylen-(Block)Copolymer, worin der Anteil der Struktureinheiten von Ethylen ≥ 10 Gew.-% beträgt (als Komponente B3), und ein Polyethylen-Composite (als Komponente B4) bestehend aus: 70 bis 80 Gew.-% Ethylen-Homopolymer und 20 bis 30 Gew.-% eines Ethylen-1 -Buten-Copolymers.

Besonders bevorzugt enthält (oder besteht aus) die zweite Polymerschicht (B) gemäß der vorgenannten Ausführungsform:
B1) 17 bis 35 Gew.-%, bevorzugt 19 bis 30 Gew.-%, eines Ethylen-1-Octen-Copolymers;
B2) 22 bis 28 Gew.-%, bevorzugt 23 bis 27 Gew.-%, eines Styrol-Ethylen-Butylen-Styrol-Blockcopolymers (SEBS);
B3) 25 bis 35 Gew.-%, bevorzugt 27 bis 33 Gew.-%, eines Propylen-Ethylen-(Block)Copolymers; und
B4) 18 bis 28 Gew.-%, bevorzugt 19 bis 26 Gew.-% eines Polyethylen-Composite bestehend aus: 70 bis 80 Gew.-% Ethylen-Homopolymer und 20 bis 30 Gew.-% eines Ethylen-1-Buten-Copolymers.

Die vorstehenden Gewichtsangaben für die Komponenten B1), B2), B3) und B4) der zweiten Polymerschicht (B) beziehen sich auf das Gesamtgewicht der zweiten Polymerschicht (B).

### Mittlere Polymerschicht (C)

Die mittlere Polymerschicht (C) hat den größten Massenanteil (mindestens 50 Gew.-%) der Mehrschichtfolie, bevorzugt 60 bis 95 Gew.-%, besonders bevorzugt 70 bis 90 Gew.-%, ganz besonders bevorzugt 75 bis 85 Gew.-% der gesamten Mehrschichtfolie und dient zur Verbesserung der Schlagzähigkeit der gesamten Struktur.

Die mittlere Polymerschicht (C) der erfindungsgemäßen Mehrschichtfolie enthält (oder besteht aus) die Komponenten C1), C2), C3) und optional C4) in folgenden Anteilen (jeweils bezogen auf (C)):
C1) 20 bis 40 Gew.-%, bevorzugt 25 bis 40 Gew.-%, besonders bevorzugt 30 bis 38 Gew.-%;
C2) 15 bis 30 Gew.-%, bevorzugt 18 bis 30 Gew.-%, besonders bevorzugt 20 bis 28 Gew.-%;
C3) 25 bis 50 Gew.-%, bevorzugt 25 bis 45 Gew.-%, besonders bevorzugt 25 bis 39 Gew.-%, ganz besonders bevorzugt 25 bis 35 Gew.-%; und
C4) 0 bis 20 Gew.-%, bevorzugt 1 bis 15 Gew.-%, besonders bevorzugt 3 bis 12 Gew.-%.

### Komponente C1)

Komponente C1) ist mindestens ein, vorzugsweise ein, Styrol-Blockcopolymer (SBC) Elastomer.
Styrol-Blockcopolymer (SBC) Elastomer C1) ist wie Komponente B2) definiert, so dass auf die entsprechenden Ausführungen zu Komponente B2) verwiesen wird.

### Komponente C2)

Komponente C2) ist mindestens ein, vorzugsweise ein, Polyethylen-Elastomer, welches ein Copolymer von Ethylen mit einem alpha-Olefin enthaltend 4 bis 12, bevorzugt 4 bis 8 Kohlenstoffatome ist.

Das als Komponente C2) eingesetzte Polyethylen-Elastomer ist wie das als Komponente B1) eingesetzte Polyethylen-Elastomer definiert, so dass auf die entsprechenden Ausführungen zu Komponente B1) verwiesen wird.

### Komponente C3)

Komponente C3) ist mindestens ein, vorzugsweise ein, Propylen-Ethylen-(Block)Copolymer, worin - bezogen auf (C3) - der Anteil der Struktureinheiten von Ethylen ≥ 9 Gew.-%, oft 9 bis 15 Gew.-%, bevorzugt ≥ 10 Gew.-%, oft bevorzugt 10 bis 12 Gew.-%, beträgt.

Das als Komponente C3) eingesetzte Propylen-Ethylen-(Block)Copolymer ist wie das als Komponente B3) eingesetzte Propylen-Ethylen-(Block)Copolymer definiert, so dass auf die entsprechenden Ausführungen zu Komponente B3) verwiesen wird.

### Komponente C4)

Die optionale mindestens eine, vorzugsweise eine, Komponente C4) ist ausgewählt aus der Gruppe bestehend aus: Polypropylen-Terpolymeren, statistischen Propylen-Ethylen-Copolymeren und Polybuten-1 Plastomeren.

Bevorzugt ist Komponente C4) vorhanden.

Das als Komponente C4) eingesetzte Polypropylen-Terpolymer ist wie das als Komponente B1) eingesetzte Polypropylen-Terpolymer definiert, so dass auf die entsprechenden Ausführungen zu Komponente B1) verwiesen wird.

Das als Komponente C4) eingesetzte statistische Propylen-Ethylen-Copolymer ist mindestens ein, vorzugsweise ein, statistisches Propylen-Ethylen-Copolymer.

Unter statistischen Propylen-Ethylen-Copolymeren sind Polypropylen-Copolymere (random copolymer) zu verstehen, in denen die Monomere Propylen und Ethylen statistisch verteilt sind. Der Anteil der Struktureinheiten von Ethylen beträgt darin im Allgemeinen maximal 8 Gew.-%, oftmals maximal 5 Gew.-%. Derartige statistische Propylen-Ethylen-Copolymere bilden üblicherweise eine homogene Phase (Morphologie) aus.

Geeignete statistische Propylen-Ethylen-Copolymere sind beispielsweise als Purell^{®} RP270G von LyondellBasell kommerziell erhältlich.

Das als Komponente C4) eingesetzte Polybuten-1-Plastomer ist wie das als Komponente B4) eingesetzte Polybuten-1-Plastomer definiert, so dass auf die entsprechenden Ausführungen zu Komponente B4) verwiesen wird.

Die Komponente C4) verbessert die Kompatibilität der mittleren Schicht C) mit der zweiten (Innen)-Schicht B), wodurch eine mögliche Delamination der Schicht B) verhindert werden kann.

Die Komponente C4) ist bevorzugt vorhanden und wird bevorzugt in einer Menge von 1 bis 15 Gew.-%, besonders bevorzugt 3 bis 12 Gew.-%, oftmals 5 bis 15 Gew.-%, bezogen auf C), eingesetzt.

Gemäß einer bevorzugten Ausführungsform enthält (oder besteht aus) die mittlere Polymerschicht (C) der erfindungsgemäßen Mehrschichtfolie: ein Styrol-Ethylen-Butylen-Styrol-Blockcopolymer (SEBS) (als Komponente C1), ein Ethylen-1-Octen-Copolymer (als Komponente C2), ein Propylen-Ethylen-(Block)Copolymer, worin der Anteil der Struktureinheiten von Ethylen ≥ 10 Gew.-% beträgt (als Komponente C3), und ein Polybuten-1-Plastomer (als Komponente C4).

Besonders bevorzugt enthält (oder besteht aus) die mittlere Polymerschicht (C) gemäß der vorgenannten Ausführungsform:
C1) 25 bis 40 Gew.-%, bevorzugt 30 bis 38 Gew.-%, eines Styrol-Ethylen-Butylen-Styrol-Blockcopolymers (SEBS);
C2) 18 bis 30 Gew.-%, bevorzugt 20 bis 28 Gew.-%, eines Ethylen-Octen-Copolymers;
C3) 25 bis 45 Gew.-%, bevorzugt 25 bis 39 Gew.-%, besonders bevorzugt 25 bis 35 Gew.-%eines Propylen-Ethylen-(Block)Copolymers; und
C4) 1 bis 15 Gew.-%, bevorzugt 3 bis 12 Gew.-%, eines Polybuten-1-Plastomers.

Die Gewichtsangaben für die Komponenten C1), C2), C3) und C4) der mittleren Polymerschicht (C) beziehen sich auf das Gesamtgewicht der mittleren Polymerschicht (C).

Gemäß einer weiteren bevorzugten Ausführungsform enthält (oder besteht aus) die mittlere Polymerschicht (C) der erfindungsgemäßen Mehrschichtfolie: ein Styrol-Ethylen-Butylen-Styrol-Blockcopolymer (SEBS) (als Komponente C1), ein Ethylen-1-Octen-Copolymer (als Komponente C2), ein Propylen-Ethylen-(Block)Copolymer, worin der Anteil der Struktureinheiten von Ethylen ≥ 10 Gew.-% beträgt (als Komponente C3), und ein Polypropylen-Terpolymer (als Komponente C4) aufgebaut aus Struktureinheiten von Propylen, Ethylen und Butylen.

Besonders bevorzugt enthält (oder besteht aus) die mittlere Polymerschicht (C) gemäß der vorgenannten Ausführungsform:
C1) 25 bis 40 Gew.-%, bevorzugt 30 bis 38 Gew.-%, eines Styrol-Ethylen-Butylen-Styrol-Blockcopolymers (SEBS);
C2) 18 bis 30 Gew.-%, bevorzugt 20 bis 28 Gew.-%, eines Ethylen-Octen-Copolymers;
C3) 25 bis 45 Gew.-%, bevorzugt 25 bis 39 Gew.-%, eines Propylen-Ethylen-(Block)Copolymers; und
C4) 1 bis 15 Gew.-%, bevorzugt 3 bis 12 Gew.-%, eines Polybuten-1-Plastomers.

### Mehrschichtfolie

Bevorzugt besteht die hitzesterilisierbare Mehrschichtfolie gemäß der Erfindung aus den Polymerschichten (A), (B) und (C).

Die Mehrschichtfolie kann in jeder der Polymerschichten (A), (B) und (C) übliche Additive und/oder Verarbeitungshilfsmittel, die für den Verwendungszweck der Mehrschichtfolie geeignet sind, in üblichen Mengen enthalten.

Bevorzugte Additive sind Antioxidantien und thermische Stabilisatoren (phosphitische und phenolische Stabilisatoren wie Irgafos^{®} 168, Irgafos P-EPQ, Irganox^{®} 1076 oder Irganox 1010), sowie Säurefänger wie z.B. DHT-4A^{®}, synthetischer Hydrotalcit (SHT) und Magnesiumoxid (MgO).

Bevorzugt enthält die hitzesterilisierbare Mehrschichtfolie aus den Polymerschichten (A), (B) und (C) gemäß der Erfindung mindestens ein(en) Antioxidans, thermischen Stabilisator und/oder Säurefänger, bevorzugt in einer Gesamtmenge von < 3000 ppm, bezogen auf die gesamte Mehrschichtfolie.

Bevorzugt haften die Polymerschichten (A), (B) und (C) aneinander, ohne dass ein Haftvermittler eingesetzt wird, d.h. die erfindungsgemäße Mehrschichtfolie aus den Polymerschichten (A), (B) und (C) enthält bevorzugt keinen Haftvermittler. Ferner enthält bevorzugt zumindest die zweite Polymerschicht (B) keine weiteren Additive und/oder Verarbeitungshilfsmittel (z.B. Modifikatoren, insbesondere Weichmacher), wobei ganz besonders bevorzugt keine der Polymerschichten (A), (B), und (C) weitere Additive und/oder Verarbeitungshilfsmittel, zusätzlich zu den vorstehend als bevorzugt genannten Additiven, enthält. Demnach findet keine oder kaum eine Beeinflussung z.B. einer medizinischen Lösung oder von Blutplasma durch einen aus der erfindungsgemäßen Mehrschichtfolie hergestellten Beutel während der Lagerung statt.

Die Schichtdicke der ersten Polymerschicht (A) beträgt im Allgemeinen 5 bis 15 Gew.-%, bevorzugt 7 bis 13 Gew.-%, besonders bevorzugt 7,5 bis 12,5 Gew.-%, der gesamten Folienstärke der erfindungsgemäßen Mehrschichtfolie.

Die Schichtdicke der zweiten Polymerschicht (B) beträgt im Allgemeinen 5 bis 15 Gew.-%, bevorzugt 7 bis 13 Gew.-%, besonders bevorzugt 7,5 bis 12,5 Gew.-%, der gesamten Folienstärke der erfindungsgemäßen Mehrschichtfolie.

Die mittlere Polymerschicht (C) hat den größten Anteil (bevorzugt mindestens 70 Gew.-% der gesamten Folienstärke) der erfindungsgemäßen Mehrschichtfolie und dient zur Verbesserung der Schlagzähigkeit der gesamten Struktur.

In einer Mehrschichtfolie bestehend aus (A), (B) und (C) beträgt die Schichtdicke der mittleren Polymerschicht (C) im Allgemeinen 70 bis 85 Gew.-%, bevorzugt 74 bis 80 Gew.-%.

Die gesamte Folienstärke (= Dicke) der erfindungsgemäßen Mehrschichtfolie beträgt bevorzugt 300 bis 450 µm, besonders bevorzugt 350 bis 400 µm.

Die gesamte Folienstärke bzw. Dicke einer erfindungsgemäßen Mehrschichtfolie bestehend aus den Polymerschichten (A), (B) und (C) beträgt bevorzugt 300 bis 450 µm, besonders bevorzugt 350 bis 400 µm.

Besonders bevorzugt ist eine erfindungsgemäße Mehrschichtfolie, die aus den Polymerschichten (A), (B) und (C) besteht, und dadurch gekennzeichnet ist, dass die gesamte Folienstärke der Mehrschichtfolie 300 bis 450 µm, besonders bevorzugt 350 bis 400 µm, beträgt, und - jeweils bezogen auf die gesamte Folienstärke der Mehrschichtfolie -
die Schichtdicke der ersten Polymerschicht (A) 5 bis 15 Gew.-%, bevorzugt 7 bis 13 Gew.-%,
die Schichtdicke der zweiten Polymerschicht (B) 5 bis 15 Gew.-%, bevorzugt 7 bis 13 Gew.-%; und
die Schichtdicke der mittleren Polymerschicht (C) 70 bis 85 Gew.-%, bevorzugt 74 bis 80 Gew.-%; beträgt; und
die Anteile von (A), (B) und (C) jeweils zusammen 100 Gew.-% ergeben.

### Verfahren zur Herstellung der Mehrschichtfolie

Ein weiterer Gegenstand der Erfindung ist ein Verfahren zur Herstellung der erfindungsgemäßen Mehrschichtfolie, wobei die erste Polymerschicht (A), die mittlere Polymerschicht (C), und die zweite Polymerschicht (B) coextrudiert werden.

Bei der Coextrusion werden die Kunststoffschmelzen der Polymerschichten (A), (B) und (C) vor dem Verlassen der Profildüse eines Extruders zu der erfindungsgemäßen Mehrschichtfolie zusammengeführt.

Oftmals ist der Extrusionsprozess zweistufig. In einem ersten Schritt werden die für die einzelnen Polymerschichten verwendeten Materialien in Extrudern, vorzugsweise parallelen Doppelschneckenextrudern (Compoundern), Heiz-Kühl-Mischern oder Pelletierpressen gemischt und kompaktiert. Dann werden die Kunststoffschmelzen der Polymerschichten (A), (B) und (C) in einem anderen, direkt gekoppelten oder räumlich und zeitlich getrennten Extruder vor dem Verlassen der Profildüse zu der erfindungsgemäßen Mehrschichtfolie zusammengeführt. Bevorzugt wird die durch das erfindungsgemäße Verfahren erhaltene Mehrschichtfolie mit Wasser schockgekühlt.

Durch die Coextrusion kann die erfindungsgemäße Mehrschichtfolie in Form einer flachen Folie (Flachfolienverfahren, z.B. bei Verwendung einer Breitschlitzdüse) oder eines Folienschlauches (Blasfolienverfahren, z.B. Flutung des Innenraums des Folienschlauches mit - vorzugsweise steril gefilterter - Luft) erhalten werden, wobei im Fall eines Folienschlauches die Außenseite aus der ersten Polymerschicht (A) und die Innenseite aus der zweiten Polymerschicht (B) besteht.

Ein weiterer Gegenstand der Erfindung ist ein (medizinischer) Container gegebenenfalls mit eingeschweißten Portelementen und/oder Schläuchen, insbesondere ein (medizinischer) Beutel gegebenenfalls mit eingeschweißten Portelementen und/oder Schläuchen, für medizinische Lösungen, Blutplasma, Zellen oder organisches Gewebe, hergestellt aus der erfindungsgemäßen Mehrschichtfolie, sowie ein Verfahren zur Herstellung des (medizinischen) Containers, vorzugsweise des (medizinischen) Beutels.

Auch die Verwendung des erfindungsgemäßen (medizinischen) Containers, insbesondere des erfindungsgemäßen (medizinischen) Beutels, für medizinische Lösungen, Blutplasma, Zellen oder organisches Gewebe, vorzugsweise eines Beutels für medizinische Lösungen oder insbesondere Blutplasma, ist Gegenstand der Erfindung.

Der erfindungsgemäße (medizinische) Container, insbesondere der erfindungsgemäße (medizinische) Beutel, ist aufgrund der speziellen Polymerschichten (C) und (B) der erfindungsgemäßen Mehrschichtfolie insbesondere auch zur Lagerung von medizinischen Lösungen oder Blutplasma bei Minustemperaturen bis -70°C bzw. zur Kryokonservierung von Zellen oder organischem Gewebe geeignet.

Ein Verfahren zur Herstellung eines erfindungsgemäßen (medizinischen) Containers, bevorzugt eines Beutels, umfasst die Schritte:
a) Bereitstellen mindestens einer erfindungsgemäßen hitzesterilisierbaren Mehrschichtfolie;
b) gegebenenfalls Bereitstellen eines oder mehrerer Portelemente und/oder Schläuche;
c) Formen eines (medizinischen) Containers, bevorzugt eines Beutels, aus der mindestens einen hitzesterilisierbaren Mehrschichtfolie, so dass die zweite Polymerschicht (B) die innere Fläche des (medizinischen) Containers, bevorzugt des Beutels, und die erste Polymerschicht (A) die äußere Fläche des (medizinischen) Containers, bevorzugt des Beutels, bildet;
d) gegebenenfalls Positionieren der Portelemente und/oder Schläuche zwischen den inneren Flächen an den Konturen des (medizinischen) Containers, bevorzugt des Beutels;
e) in-Kontakt-Bringen der inneren Flächen an den Konturen des (medizinischen) Containers, bevorzugt des Beutels, miteinander und mit gegebenenfalls dazwischen positionierten Portelementen und/oder Schläuchen;
f) Verschweißen der inneren Flächen an den Konturen des (medizinischen) Containers, bevorzugt des Beutels, miteinander und mit gegebenenfalls dazwischen positionierten Portelementen und/oder Schläuchen.

In Schritt a) wird die erfindungsgemäße Mehrschichtfolie vorzugsweise in Form einer Flachfolie oder einer Schlauchfolie bereitgestellt. Abhängig von der bereitgestellten Form der Folie kann sich das weitere Verfahren in bestimmten Einzelheiten unterscheiden.

Abhängig von der Anwendung des erfindungsgemäßen (medizinischen) Containers, bevorzugt des Beutels, können bei dem Verfahren nach der Bereitstellung der erfindungsgemäßen Mehrschichtfolie optional in Schritt b) zusätzliche Elemente, wie beispielsweise Portelemente und/oder Schläuche bereitgestellt werden. Die Bereitstellung dieser Elemente ist beispielsweise dann sinnvoll, wenn der erfindungsgemäße (medizinische) Container, bevorzugt der Beutel, als fester Bestandteil einer medizinischen Vorrichtung eingesetzt werden soll oder an eine medizinische Vorrichtung angeschlossen werden soll. Das Weglassen des Schritts b) kann beispielsweise sinnvoll sein, wenn der (medizinische) Container, bevorzugt der Beutel, lediglich der Aufbewahrung eines Medikaments dient und zur Entnahme des Medikaments beispielsweise durch Aufreißen oder Durchstechen mit einer Kanüle beschädigt wird.

Bevorzugt ist Schritt b) vorhanden.

In Schritt c) wird die bereitgestellte erfindungsgemäße Mehrschichtfolie in die Form eines (medizinischen) Containers, insbesondere Beutels, gebracht. Wenn in Schritt a) eine Schlauchfolie bereitgestellt wurde, kann das Formen des (medizinischen) Containers, insbesondere des Beutels, beispielsweise nur das Zuschneiden der Schlauchfolie auf die gewünschte Länge beinhalten, da bereits die zweite Polymerschicht (B) die innere Fläche der Schlauchfolie und die erste Polymerschicht (A) die äußere Fläche der Schlauchfolie bildet. Wenn in Schritt a) eine Flachfolie bereitgestellt wurde, kann in Schritt c) der (medizinische) Container, bevorzugt der Beutel, beispielsweise aus einem Stück Mehrschichtfolie geformt werden, indem dieses Stück in eine spiegelsymmetrische Form zugeschnitten wird und entlang der Spiegelachse umgeklappt wird, sodass die Ränder der Folie sich deckungsgleich aufeinanderlegen, mit der zweiten Polymerschicht (B) auf der Innenseite. Alternativ kann der erfindungsgemäße (medizinische) Container, bevorzugt der Beutel, beispielsweise aus zwei Stücken Flachfolie geformt werden, indem die zwei Stücke zueinander spiegelsymmetrisch zugeschnitten werden und deckungsgleich aufeinandergelegt werden, mit der zweiten Polymerschicht (B) auf der Innenseite. Bei dem Zuschneiden wird die Form der Folienstücke dem Verwendungszweck des (medizinischen) Containers angepasst. Rechteckige Formen haben den Vorteil, dass der Materialverlust am geringsten und die Verarbeitbarkeit am einfachsten ist. Medizinische Beutel, insbesondere Beutel für Blutplasma haben eine spezielle Form mit abgerundeten Ecken.

Abhängig davon, ob in Schritt b) zusätzliche Elemente wie Portelemente und/oder Schläuche bereitgestellt wurden, können diese Elemente in Schritt d) zwischen den inneren Flächen an den Konturen des geformten (medizinischen) Containers, bevorzugt des Beutels, positioniert werden. Im Fall einer Schlauchfolie ist hiermit das Einlegen der zusätzlichen Elemente in die Öffnungen der Schlauchfolie gemeint. Hierbei können die Elemente nur auf zwei einander gegenüberliegenden Seiten des (medizinischen) Containers, bevorzugt des Beutels, positioniert werden. Im Fall einer Flachfolie ist das Einlegen der zusätzlichen Elemente zwischen die in Schritt c) deckungsgleich aufeinander gelegten Ränder des einen oder der mehreren Flachfolienstücke gemeint. Hierbei können die Elemente an beliebigen Stellen entlang der Ränder positioniert werden, bevorzugt höchstens an zwei gegenüberliegenden Rändern.

Bevorzugt ist Schritt d) vorhanden.

In Schritt e) werden die inneren Flächen des geformten (medizinischen) Containers, bevorzugt des Beutels, an dessen Konturen miteinander und mit den gegebenenfalls zwischen den inneren Flächen befindlichen zusätzlichen Elementen in Kontakt gebracht, damit diese in Schritt f) durch Zuführen von Hitze und gegebenenfalls mechanischem Druck zusammen verschweißt werden können. Bei dem Verschweißen ist die Temperatur bevorzugt so gewählt, dass sie über dem Schmelz- bzw. Erweichungspunkt der zweiten Polymerschicht (B), jedoch unter dem Schmelz- bzw. Erweichungspunkt der ersten Polymerschicht (A) liegt. Hierdurch kann gewährleistet werden, dass die zweite Polymerschicht (B) an den Konturen des (medizinischen) Containers, bevorzugt des Beutels, schmilzt und diesen dadurch fest und fluiddicht verschließt, während die erste Polymerschicht (A) ihre Form behält und dadurch die Stabilität der medizinischen Verpackung, bevorzugt des Beutels, erhält.

Ein wichtiges Kriterium für den Einsatz der erfindungsgemäßen Mehrschichtfolie als Primärpackmittel für medizinische Lösungen oder Blutplasma ist die Sperrwirkung gegen Flüssigkeitsverlust und das Verhindern des Eindringens von Mikroorganismen. Durch einen solchen Flüssigkeitsverlust entsteht eine Aufkonzentrierung der Lösungs-Wirkstoffe, der bestimmte Werte nicht überschreiten darf. Der Flüssigkeitsverlust während der Lagerung entscheidet unter anderem über die Haltbarkeitsdauer des Produktes. Die Formulierung der erfindungsgemäßen Mehrschichtfolie ist so gewählt, dass bei guter Schlagzähigkeit eine Wasserdampf-Barriere gemäß DIN EN ISO 3826-1 erzielt wird. Außerdem kann die Lagerung bestimmter Blutbestandteile, wie Thrombozytenkonzentrate, spezifische Gasaustauschraten für Sauerstoff und Kohlendioxid erfordern.

Die erfindungsgemäße hitzesterilisierbare Mehrschichtfolie zeichnet sich dadurch aus, dass sie mit einem thermisch dauerbeheizten Schweißverfahren auch mit Portelementen sicher verschweißbar ist, ohne Weichmacher auskommt, medizinische Lösungen, Blutplasma, Zellen oder organisches Gewebe kaum beeinflusst und eine geeignete Wasserdampfbarriere aufweist. Gleichzeitig weist die erfindungsgemäße Mehrschichtfolie eine signifikant verbesserte Kälteschlagzähigkeit auf. Daraus hergestellte erfindungsgemäße Container, insbesondere Beutel, sind zur Lagerung von medizinischen Lösungen oder Blutplasma bei Minustemperaturen bis -70°C bzw. zur Kryokonservierung von Zellen oder organischem Gewebe geeignet.

Erfindungsgemäß bevorzugt ist ein (medizinischer) Container mit eingeschweißten Portelementen und/oder Schläuchen, insbesondere ein (medizinischer) Beutel mit eingeschweißten Portelementen und/oder Schläuchen, für medizinische Lösungen, Blutplasma, Zellen oder organisches Gewebe, insbesondere für Blutplasma, hergestellt aus der erfindungsgemäßen Mehrschichtfolie, wobei die Portelemente und/oder Schläuche aus einem Mehrschichtschlauch sind, enthaltend (bestehend aus):
x) eine erste Polymerschicht (X) enthaltend (bestehend aus) mindestens ein, vorzugsweise ein, mit mindestens einem Impact Modifier modifiziertes statistisches Propylen-Ethylen-Copolymer und/oder Polypropylen Terpolymer; bevorzugt mindestens ein, vorzugsweise ein, statistisches Propylen-Ethylen-Copolymer und/oder Polypropylen Terpolymer modifiziert mit 15 bis 40 Gew.-% mindestens eines Impact Modifiers ausgewählt aus der Gruppe bestehend aus: Styrol-Blockcopolymeren, wie z.B. Styrol-Ethylen-Butylen-Styrol-Blockcopolymere (SEBS), Styrol-Ethylen-Propylen-Styrol-Blockcopolymer (SEPS), Styrol-Isopren-Styrol-Blockcopolymer (SIS), und Styrol-Butadien-Styrol-Blockcopolymer (SBS), bevorzugt SEBS und SEPS, insbesondere SEBS, und/oder Polyethylen-Elastomeren, wie z.B. Copolymeren von Ethylen mit mindestens einem alpha-Olefin enthaltend 4 bis 16, bevorzugt 4 bis 12, besonders bevorzugt 4 bis 8 Kohlenstoffatome, insbesondere Ethylen-Butylen-Copolymeren und/oder Ethylen-Octen-Copolymeren;
y) eine zweite Polymerschicht (Y) enthaltend (bestehend aus):
   Y1) 20 bis 50 Gew.-% - bezogen auf (Y) - mindestens eines Polypropylen-Terpolymers und/oder statistischen Propylen-Ethylen-Copolymers;
   Y2) 20 bis 50 Gew.-%- bezogen auf (Y) - mindestens eines Impact Modifiers ausgewählt aus der Gruppe der Styrol-Blockcopolymere, wie z.B. Styrol-Ethylen-Butylen-Styrol-Blockcopolymere (SEBS), Styrol-Ethylen-Propylen-Styrol-Blockcopolymer (SEPS), Styrol-Isopren-Styrol-Blockcopolymer (SIS), und Styrol-Butadien-Styrol-Blockcopolymer (SBS), bevorzugt SEBS und SEPS, insbesondere SEBS;
   Y3) 10 bis 50 Gew.-% - bezogen auf (Y) - mindestens eines Polyethylen-Elastomers, welches ein Copolymer von Ethylen und einem alpha-Olefin enthaltend 4 bis 12 Kohlenstoffatome, oder ein Copolymer von Ethylen und einer Carbonylverbindung, ist;
z) eine mittlere Polymerschicht (Z), die sich zwischen der ersten Polymerschicht (X) und der zweiten Polymerschicht (Y) befindet, enthaltend (bestehend aus):
   Z1) 30 bis 70 Gew.-% - bezogen auf (Z) - mindestens eines Impact Modifiers ausgewählt aus der Gruppe bestehend aus: Styrol-Blockcopolymeren, wie z.B. Styrol-Ethylen-Butylen-Styrol-Blockcopolymere (SEBS), Styrol-Ethylen-Propylen-Styrol-Blockcopolymer (SEPS), Styrol-Isopren-Styrol-Blockcopolymer (SIS), und Styrol-Butadien-Styrol-Blockcopolymer (SBS), bevorzugt SEBS und SEPS, insbesondere SEBS, und/oder Polyethylen-Elastomeren wie z.B. Copolymeren von Ethylen mit mindestens einem alpha-Olefin enthaltend 4 bis 16, bevorzugt 4 bis 12, besonders bevorzugt 4 bis 8 Kohlenstoffatome, insbesondere Ethylen-Butylen-Copolymeren und/oder Ethylen-Octen-Copolymeren;
   Z2) 30 bis 70 Gew.-% - bezogen auf (Z) - mindestens eines Polypropylen-Terpolymers und/oder statistischen Propylen-Ethylen-Copolymers, bevorzugt eines statistischen Propylen-Ethylen-Copolymers.

In den Schichten (X), (Y) und (Z) sind die genannten Polymere, wie die entsprechenden bereits oben genannten Polymere (der Schichten (A), (B) und (C)) definiert.

Unter einem als Komponente Y3) genannten Copolymer von Ethylen und einer Carbonylverbindung ist z.B. ein Copolymer von Ethylen und einer Carbonsäure, einem Carbonsäureester, einem Aldehyd oder einem Keton zu verstehen. Geeignete Carbonylverbindungen sind z.B. Ethenylacetate.

Bevorzugt wird als Komponente Y3) ein Polyethylen-Elastomer, welches ein Copolymer von Ethylen und einem alpha-Olefin enthaltend 4 bis 12 Kohlenstoffatome ist, eingesetzt.

Besonders bevorzugt sind die Portelemente und/oder Schläuche des vorstehend beschriebenen (medizinischen) Containers, insbesondere (medizinischen) Beutels, aus einer Mehrschichtschlauch enthaltend Schichten (X), (Y) und (Z) bestehend aus:
(X): 60 bis 85 Gew.-%, bevorzugt 65 bis 85 Gew.-%, mindestens eines Polypropylen-Terpolymers aufgebaut aus Struktureinheiten von Propylen, Ethylen und Butylen und/oder statistischen Propylen-Ethylen-Copolymers, und 15 bis 40 Gew.-%, bevorzugt 15 bis 35 Gew.-%, mindestens eines Impact Modifiers ausgewählt aus der Gruppe bestehend aus: Styrol-Blockcopolymeren, insbesondere SEBS und/oder SEPS, und/oder Copolymeren von Ethylen mit mindestens einem alpha-Olefin enthaltend 4 bis 12 Kohlenstoffatome, insbesondere ein Ethylen-Butylen-Copolymer und/oder Ethylen-Octen-Copolymer;
(Y): Y1) 20 bis 35 Gew.-% mindestens eines Polypropylen-Terpolymers aufgebaut aus Struktureinheiten von Propylen, Ethylen und Butylen und/oder statistischen Propylen-Ethylen-Copolymers;
   Y2) 25 bis 45 Gew.-% mindestens eines Impact Modifiers ausgewählt aus der Gruppe der Styrol-Blockcopolymere, insbesondere SEBS und/oder SEPS;
   Y3) 10 bis 50 Gew.-% mindestens eines Polyethylen-Elastomers, welches ein Copolymer von Ethylen und einem alpha-Olefin enthaltend 4 bis 8 Kohlenstoffatome, insbesondere ein Ethylen-Octen-Copolymer;
(Z): Z1) 40 bis 70 Gew.-% mindestens eines Impact Modifiers ausgewählt aus der Gruppe bestehend aus: Styrol-Blockcopolymeren, insbesondere SEBS und/oder SEPS, und/oder Copolymeren von Ethylen mit mindestens einem alpha-Olefin enthaltend 4 bis 12 Kohlenstoffatome, insbesondere Ethylen-Butylen-Copolymeren und/oder Ethylen-Octen-Copolymeren;
   Z2) 30 bis 60 Gew.-% mindestens eines statistischen Propylen-Ethylen-Copolymers.

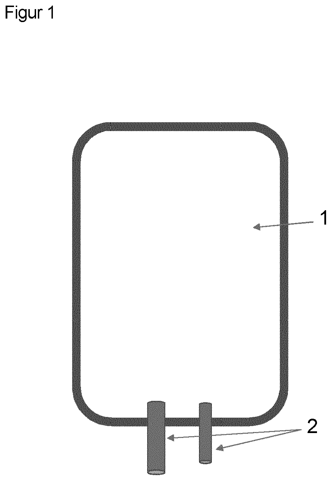

Figur 1 zeigt einen medizinischen Beutel (1) mit Schlauchstücken (2) gemäß der Erfindung.

Der erfindungsgemäß optional verwendete Schlauch hat im Allgemeinen eine Länge von mindestens ≥ 200 mm, einen Innendurchmesser von ≥ 2,7 mm, und eine Wandstärke von ≥ 0,5 mm, bevorzugt ≥ 1mm.

Im Allgemeinen haben die erfindungsgemäßen (medizinischen) Container, insbesondere Beutel, ein Volumen von 150 bis 600 ml.

Nachfolgend wird die Erfindung anhand von Beispielen näher erläutert:

### Beispiel 1:

Erste Polymerschicht (A):
- 90 Gew.-% Moplen^{®} HP525J von Lyondell Basell Corp., USA/ Polypropylen-Homopolymer
- 10 Gew.-% Tuftec^{®} H1062 von Asahi Kasei, Japan/ Styrol-Ethylen/Butylen-Blockcopolymer

Die genannte Formulierung wurde in einem separaten Compoundierschritt im Schmelzezustand gemischt und für den weiteren Einsatz granuliert.

### Mittlere Polymerschicht (C):

- 30 Gew.-% Adflex^{®} C290F von LyondellBasell / heterophasisches Propylen-Copolymer
- 35 Gew.-% Tuftec^{®} H1062 von Asahi Kasei, Japan/ Styrol-Ethylen/Butylen-Blockcopolymer
- 25 Gew.-% Engage^{®} 8003 von Dow Chemical Company, USA/ Ethylen-Octen-Polyolefin Elastomer
- 10 Gew.-% Koattro KT MR05 von LyondellBasell / Polybutene-1

Die genannte Formulierung wurde in einem separaten Compoundierschritt im Schmelzezustand gemischt und für den weiteren Einsatz granuliert.

### Zweite Polymerschicht (B):

- 25 Gew.-% Bormed^{®} TD109CF von Borealis, Österreich/ Polypropylen-Terpolymer
- 25 Gew.-% Tuftec^{®} H1062 von Asahi Kasei, Japan/ Styrol-Ethylen/Butylen-Blockcopolymer
- 30 Gew.-% Adflex^{®} C290F von LyondellBasell / heterophasisches Propylen-Copolymer
- 20 Gew.-% Koattro KT MR05 von LyondellBasell / Polybutene-1

Die genannte Formulierung wurde in einem separaten Compoundierschritt im Schmelzezustand gemischt und für den weiteren Einsatz granuliert.

Die Schmelzen aus den granulierten Compounds der ersten Polymerschicht (A), der mittleren Polymerschicht (C) und der zweiten Polymerschicht (B) wurden mit für Polypropylen üblichen Prozessparametern (Temperatur 180 bis 230°C) coextrudiert und eine Mehrschicht-Folie wurde erhalten.

Die Folie wurde mit einer Gesamtdicke von 350 µm gefertigt, wobei die erste Polymerschicht (A) und zweite Polymerschicht (B) jeweils eine Dicke von 35 µm und die mittlere Polymerschicht (C) eine Dicke von 280 µm aufweist. Die hergestellte Folie wurde heißdampfsterilisiert.

Aus zwei der hergestellten Mehrschichtfolien wurde ein medizinischer Beutel geformt, wobei die zweite Polymerschicht (B) die innere Fläche des Beutels, und die erste Polymerschicht (A) die äußere Fläche des Beutels, bildete und zwei Schläuche aus einem nachstehend beschriebenen Material (Außendurchmesser: 4,1 mm, Innendurchmesser: 2,7 mm) zwischen den inneren Flächen an den Konturen des Beutels positioniert wurden. Dann wurden die inneren Flächen an den Konturen des Beutels miteinander und mit den dazwischen positionierten Schläuchen in Kontakt gebracht und danach wurden die inneren Flächen an den Konturen des Beutels miteinander und mit den dazwischen positionierten Schläuchen mit Hilfe von auf 134 bis 142°C temperierten Schweißwerkzeugen fest verschweißt.

### Schlauchmaterial:

### Erste Polymerschicht (X):

- 65 Gew.-% Purell^{®} RP270G von LyondellBasell/ statistisches Propylen-Ethylen-Copolymer
- 35 Gew.-% Tuftec^{®} H1062 von Asahi Kasei, Japan/ Styrol-Ethylen/Butylen-Blockcopolymer

Die genannte Formulierung wurde in einem separaten Compoundierschritt im Schmelzezustand gemischt und für den weiteren Einsatz granuliert.

### Mittlere Polymerschicht (Z)

- 30 Gew.-% Tuftec^{®} H1521 von Asahi Kasei, Japan/ Styrol-Ethylen/Butylen-Blockcopolymer
- 40 Gew.-% Purell^{®} RP270G von LyondellBasell/ statistisches Ethylen-Propylen-Copolymer
- 30 Gew.-% Hybrar^{®} 7311 von Kuraray/ Styrol-Ethylen/Propylen-Blockcopolymer

Die genannte Formulierung wurde in einem separaten Compoundierschritt im Schmelzezustand gemischt und für den weiteren Einsatz granuliert.

### Zweite Polymerschicht (Y):

- 35 Gew.-% Tuftec^{®} H1521 von Asahi Kasei, Japan/ Styrol-Ethylen/Butylen-Blockcopolymer
- 30 Gew.-% Engage^{®} 8003 von Dow Chemical Company, USA/ Ethylen-Octen-Polyolefin Elastomer
- 35 Gew.-% Bormed^{®} TD109CF von Borealis, Österreich/ Polypropylen-Terpolymer

Die genannte Formulierung wurde in einem separaten Compoundierschritt im Schmelzezustand homogen gemischt, extrudiert und für den weiteren Einsatz granuliert.

Die Schmelzen aus den granulierten Compounds der ersten Polymerschicht (X), der mittleren Polymerschicht (Z) und der zweiten Polymerschicht (Y) wurden mit für Polypropylen üblichen Prozessparametern auf einer speziellen Blasfolienanlage für die mehrschichtige Coextrusion von medizinischen Schläuchen mit Wasserkühlung hergestellt. Das Schlauchinnere wird mit steril gefilterter Luft geflutet.

Der erhaltene Beutel mit den Schlauchstücken eignet sich sehr gut für die Lagerung von Blutplasma bei tiefen Temperaturen von z.B. -65°C.

### Beispiel 2

### Erste Polymerschicht (A): Zusammensetzung und Herstellung wie in Beispiel 1

### Mittlere Polymerschicht (C):

- 30 Gew.% Adflex^{®} C290F von LyondellBasell / heterophasisches Propylen-Copolymer
- 35 Gew.-% Tuftec^{®} H1062 von Asahi Kasei, Japan/ Styrol-Ethylen/Butylen-Blockcopolymer
- 25 Gew.-% Engage^{®} 8003 von Dow Chemical Company, USA/ Ethylen-Octen-Polyolefin Elastomer
- 10 Gew.-% Bormed^{®} TD109CF von Borealis, Österreich/ Polypropylen-Terpolymer

Die genannte Formulierung wurde in einem separaten Compoundierschritt im Schmelzezustand gemischt und für den weiteren Einsatz granuliert.

### Zweite Polymerschicht (B):

- 25 Gew.-% Engage^{®} 8003 von Dow Chemical Company, USA/ Ethylen-Octen-Polyolefin Elastomer
- 25 Gew.-% Tuftec^{®} H1062 von Asahi Kasei, Japan/ Styrol-Ethylen/Butylen-Blockcopolymer
- 30 Gew.-% Adflex^{®} C290F von LyondellBasell / heterophasisches Propylen-Copolymer
- 25 Gew.-% Tosoh FY-13 von Tosoh Corp., Japan // Composite aus Ethylen-Homopolymer (70 bis 80 Gew.-%) und Ethylen-1-Buten-Copolymer (20 bis 30 Gew.-%)/ Dichte: 950 kg/m³, Tₘ: 128°C

Die genannte Formulierung wurde in einem separaten Compoundierschritt im Schmelzezustand gemischt und für den weiteren Einsatz granuliert. Die Schmelzen aus den granulierten Compounds der ersten Polymerschicht (A), der mittleren Polymerschicht (C) und der zweiten Polymerschicht (B) wurden mit für Polypropylen üblichen Prozessparametern (Temperatur 180 bis 230°C) coextrudiert und eine Mehrschicht-Folie wurde erhalten.

Die Folie wurde mit einer Gesamtdicke von 350 µm gefertigt, wobei die erste Polymerschicht (A) und zweite Polymerschicht (B) jeweils eine Dicke von 35 µm und die mittlere Polymerschicht (C) eine Dicke von 280 µm aufweist. Die hergestellte Folie wurde heißdampfsterilisiert.

Aus zwei der hergestellten Mehrschichtfolien wurde ein medizinischer Beutel geformt, wobei die zweite Polymerschicht (B) die innere Fläche des Beutels, und die erste Polymerschicht (A) die äußere Fläche des Beutels, bildete und zwei Schläuche aus einem wie in Beispiel 1 beschriebenen Material (Außendurchmesser: 4,1 mm, Innendurchmesser: 2,7 mm) zwischen den inneren Flächen an den Konturen des Beutels positioniert wurden. Dann wurden die inneren Flächen an den Konturen des Beutels miteinander und mit den dazwischen positionierten Schläuchen in Kontakt gebracht und danach wurden die inneren Flächen an den Konturen des Beutels miteinander und mit den dazwischen positionierten Schläuchen mit Hilfe von auf 134 bis 142 °C temperierten Schweißwerkzeugen fest verschweißt.

Der erhaltene Beutel mit Schlauchstücken eignet sich sehr gut für die Lagerung von Blutplasma bei tiefen Temperaturen von z.B. -65°C.

### Beispiel 3 (nicht erfindungsgemäß):

### Erste Polymerschicht (A): Zusammensetzung und Herstellung wie in Beispiel 1

### Mittlere Polymerschicht (C):

- 10 Gew.% Adflex^{®} C290F von LyondellBasell / heterophasisches Propylen-Copolymer
- 15 Gew.-% Tuftec^{®} H1062 von Asahi Kasei, Japan/ Styrol-Ethylen/Butylen-Blockcopolymer
- 15 Gew.-% Engage^{®} 8003 von Dow Chemical Company, USA/ Ethylen-Octen-Polyolefin Elastomer
- 60 Gew.-% Bormed^{®} TD109CF von Borealis, Österreich/ Polypropylen-Terpolymer

Die genannte Formulierung wurde in einem separaten Compoundierschritt im Schmelzezustand gemischt und für den weiteren Einsatz granuliert.

### Zweite Polymerschicht (B):

- 70 Gew.-% Bormed^{®} TD109CF von Borealis, Österreich/ Polypropylen-Terpolymer
- 15 Gew.-% Tuftec^{®} H1062 von Asahi Kasei, Japan/ Styrol-Ethylen/Butylen-Blockcopolymer
- 15 Gew.-% Purell^{®} RP270G von LyondellBasell/ statistisches Ethylen-Propylen-Copolymer

Die genannte Formulierung wurde in einem separaten Compoundierschritt im Schmelzezustand gemischt und für den weiteren Einsatz granuliert. Die Schmelzen aus den granulierten Compounds der ersten Polymerschicht (A), der mittleren Polymerschicht (C) und der zweiten Polymerschicht (B) wurden mit für Polypropylen üblichen Prozessparametern (Temperatur 180 bis 230°C) coextrudiert und eine Mehrschicht-Folie wurde erhalten.

Die Folie wurde mit einer Gesamtdicke von 350 µm gefertigt, wobei die erste Polymerschicht (A) und zweite Polymerschicht (B) jeweils eine Dicke von 35 µm und die mittlere Polymerschicht (C) eine Dicke von 280 µm aufweist. Die hergestellte Folie wurde heißdampfsterilisiert.

Aus zwei der hergestellten Mehrschichtfolien wurde ein medizinischer Beutel geformt, wobei die zweite Polymerschicht (B) die innere Fläche des Beutels, und die erste Polymerschicht (A) die äußere Fläche des Beutels, bildete und zwei Schläuche aus einem wie in Beispiel 1 beschriebenen Material (Außendurchmesser: 4,1 mm, Innendurchmesser: 2,7 mm) zwischen den inneren Flächen an den Konturen des Beutels positioniert wurden. Dann wurden die inneren Flächen an den Konturen des Beutels miteinander und mit den dazwischen positionierten Schläuchen in Kontakt gebracht und danach wurden die inneren Flächen an den Konturen des Beutels miteinander und mit den dazwischen positionierten Schläuchen mit Hilfe von auf 134 bis 142 °C temperierten Schweißwerkzeugen fest verschweißt.

## Patentansprüche

1. Hitzesterilisierbare Mehrschichtfolie, umfassend
a) eine erste Polymerschicht (A) enthaltend mindestens ein mit mindestens einem Impact Modifier modifiziertes Polypropylen-Homopolymer;
b) eine zweite Polymerschicht (B) enthaltend:
B1) 15 bis 45 Gew.-% mindestens einer Komponente B1) ausgewählt aus der Gruppe bestehend aus: Polypropylen-Terpolymeren und Polyethylen-Elastomeren, welche Copolymere von Ethylen und einem alpha-Olefin enthaltend 4 bis 12 Kohlenstoffatome sind;
B2) 20 bis 30 Gew.-% mindestens eines Styrol-Blockcopolymer (SBC) Elastomers;
B3) 20 bis 40 Gew.-% mindestens eines Propylen-Ethylen-(Block)Copolymers, worin der Anteil der Struktureinheiten von Ethylen ≥ 9 Gew.-%, oft 9 bis 15 Gew.-%, beträgt;
B4) 15 bis 30 Gew.-% mindestens einer Komponente B4) ausgewählt aus der Gruppe bestehend aus: Polybuten-1-Plastomeren und Polyethylen-Composites mit einer Schmelztemperatur von > 125°C und einer Dichte von 945 bis 960 kg/m³; und
c) eine mittlere Polymerschicht (C), die sich zwischen der ersten Polymerschicht (A) und der zweiten Polymerschicht (B) befindet, enthaltend (bestehend aus):
C1) 20 bis 40 Gew.-% mindestens eines Styrol-Blockcopolymer (SBC) Elastomers;
C2) 15 bis 30 Gew.-% mindestens eines Polyethylen-Elastomers, welches ein Copolymer von Ethylen mit einem alpha-Olefin enthaltend 4 bis 12 Kohlenstoffatome ist;
C3) 25 bis 50 Gew.-% mindestens eines Propylen-Ethylen-(Block)Copolymers, worin der Anteil der Struktureinheiten von Ethylen ≥ 9 Gew.-%, oft 9 bis 15 Gew.-%, beträgt; und
C4) 0 bis 20 Gew.-% mindestens einer Komponente C4) ausgewählt aus der Gruppe bestehend aus: Polypropylen-Terpolymeren, statistischen Propylen-Ethylen-Copolymeren und Polybuten-1 Plastomeren.

2. Hitzesterilisierbare Mehrschichtfolie gemäß Anspruch 1, worin die zweite Polymerschicht (B) enthält:
B1) 17 bis 35 Gew.-%, bevorzugt 19 bis 30 Gew.-%;
B2) 22 bis 28 Gew.-%, bevorzugt 23 bis 27 Gew.-%;
B3) 25 bis 35 Gew.-%, bevorzugt 27 bis 33 Gew.-%;
B4) 18 bis 28 Gew.-%, bevorzugt 19 bis 26 Gew.-%.

3. Hitzesterilisierbare Mehrschichtfolie gemäß Anspruch 1 oder 2, worin die mittlere Polymerschicht (C) enthält:
C1) 25 bis 40 Gew.-%, bevorzugt 30 bis 38 Gew.-%;
C2) 18 bis 30 Gew.-%, bevorzugt 20 bis 28 Gew.-%;
C3) 25 bis 45 Gew.-%, bevorzugt 25 bis 39 Gew.-%;
C4) 1 bis 15 Gew.-%, bevorzugt 3 bis 12 Gew.-%.

4. Hitzesterilisierbare Mehrschichtfolie gemäß einem der Ansprüche 1 bis 3, worin das Polypropylen-Terpolymer (Komponente B1) und/oder C4)) ein Terpolymer von Propylen, Ethylen und einem C₄-C₁₂-α-Olefin, bevorzugt ein Terpolymer von Propylen, Ethylen und Butylen, ist.

5. Hitzesterilisierbare Mehrschichtfolie gemäß einem der Ansprüche 1 bis 4, worin das Polyethylen-Elastomer (Komponente B1) und/oder C2)) ein Ethylen-Butylen-Copolymer und/oder ein Ethylen-1-Octen-Copolymer, insbesondere ein Ethylen-1-Octen-Copolymer, ist.

6. Hitzesterilisierbare Mehrschichtfolie gemäß einem der Ansprüche 1 bis 5, worin das Styrol-Blockcopolymer-Elastomer (Komponente B2) und/oder C1)) ausgewählt ist aus der Gruppe bestehend aus: Styrol-Ethylen-Butylen-Styrol-Blockcopolymer (SEBS), Styrol-Ethylen-Propylen-Styrol-Blockcopolymer (SEPS), Styrol-Ethylen-Ethylen-Propylen-Styrol-Blockcopolymer (*SEEPS*)*,* Styrol-Isopren-Styrol-Blockcopolymer (SIS) und Styrol-Butadien-Styrol-Blockcopolymer (SBS), bevorzugt SEBS und SEPS, insbesondere SEBS.

7. Hitzesterilisierbare Mehrschichtfolie gemäß einem der Ansprüche 1 bis 6, worin das Polyethylen-Composite (Komponente B4)) besteht aus:
65 bis 85 Gew.-% Ethylen-Homopolymer, und
15 bis 35 Gew.-%, bevorzugt 20 bis 30 Gew.-%, mindestens eines Ethylen-Copolymers, welches als Comonomer, bevorzugt 25 bis 40 Gew.-%, mindestens ein alpha-Olefin mit 4 bis 12 Kohlenstoffatomen, vorzugsweise 1-Buten, enthält.

8. Hitzesterilisierbare Mehrschichtfolie gemäß Anspruch 7, **dadurch gekennzeichnet, dass** das Ethylen-Copolymer durch Copolymerisation von Ethylen und mindestens einem alpha-Olefin in Gegenwart eines Metallocen-Katalysators hergestellt wird.

9. Hitzesterilisierbare Mehrschichtfolie gemäß einem der Ansprüche 1 bis 8, worin die erste Polymerschicht (A) 80 bis 95 Gew.-%, insbesondere 85 bis 95 Gew.-%, eines Polypropylen-Homopolymers und 5 bis 20 Gew.-%, insbesondere 5 bis 15 Gew.-%, mindestens eines Impact Modifiers ausgewählt aus der Gruppe bestehend aus: Styrol-Blockcopolymeren, bevorzugt ein Styrol-Ethylen/Butylen-Blockcopolymer, und/oder Polyethylen-Elastomeren, insbesondere Copolymeren von Ethylen mit mindestens einem alpha-Olefin enthaltend 4 bis 12, bevorzugt 4 bis 8, Kohlenstoffatome, enthält.

10. Hitzesterilisierbare Mehrschichtfolie gemäß einem der Ansprüche 1 bis 9, **dadurch gekennzeichnet, dass** die Mehrschichtfolie aus den Polymerschichten (A), (B) und (C) besteht, und die gesamte Folienstärke der Mehrschichtfolie 300 bis 450 µm, bevorzugt 350 bis 400 µm, beträgt, und die Schichtdicke der ersten Polymerschicht (A) 5 bis 15 Gew.-%, bevorzugt 7 bis 13 Gew.-%,
die Schichtdicke der zweiten Polymerschicht (B) 5 bis 15 Gew.-%, bevorzugt 7 bis 13 Gew.-%; und
die Schichtdicke der mittleren Polymerschicht (C) 70 bis 85 Gew.-%, bevorzugt 74 bis 80 Gew.-%; beträgt.

11. Verfahren zur Herstellung einer Mehrschichtfolie gemäß einem der Ansprüche 1 bis 10, wobei die erste Polymerschicht (A), die mittlere Polymerschicht (C), und die zweite Polymerschicht (B) coextrudiert werden.

12. Medizinischer Container, insbesondere medizinischer Beutel, gegebenenfalls mit eingeschweißten Portelementen und/oder Schläuchen, für medizinische Lösungen, Blutplasma, Zellen oder organisches Gewebe, hergestellt aus der erfindungsgemäßen Mehrschichtfolie gemäß einem der Ansprüche 1 bis 10.

13. Verfahren zur Herstellung eines medizinischen Containers, bevorzugt eines Beutels, gemäß Anspruch 12 umfassend die Schritte:
a) Bereitstellen mindestens einer gemäß Anspruch 11 hergestellten hitzesterilisierbaren Mehrschichtfolie;
b) gegebenenfalls Bereitstellen eines oder mehrerer Portelemente und/oder Schläuche;
c) Formen eines medizinischen Containers, bevorzugt eines Beutels, aus der mindestens einen hitzesterilisierbaren Mehrschichtfolie, so dass die zweite Polymerschicht (B) die innere Fläche des medizinischen Containers, bevorzugt des Beutels, und die erste Polymerschicht (A) die äußere Fläche des medizinischen Containers, bevorzugt des Beutels, bildet;
d) gegebenenfalls Positionieren der Portelemente und/oder Schläuche zwischen den inneren Flächen an den Konturen des medizinischen Containers, bevorzugt des Beutels;
e) in-Kontakt-Bringen der inneren Flächen an den Konturen des medizinischen Containers, bevorzugt des Beutels, miteinander und mit gegebenenfalls dazwischen positionierten Portelementen und/oder Schläuchen;
f) Verschweißen der inneren Flächen an den Konturen des medizinischen Containers, bevorzugt des Beutels, miteinander und mit gegebenenfalls dazwischen positionierten Portelementen und/oder Schläuchen.

14. Medizinischer Container, insbesondere medizinischer Beutel, mit eingeschweißten Portelementen und/oder Schläuchen gemäß Anspruch 12, **dadurch gekennzeichnet, dass** die Portelemente und/oder Schläuche aus einem Mehrschichtschlauch sind, enthaltend:
x) eine erste Polymerschicht (X) enthaltend mindestens ein mit mindestens einem Impact Modifier modifiziertes statistisches Propylen-Ethylen-Copolymer und/oder Polypropylen Terpolymer; bevorzugt mindestens ein statistisches Propylen-Ethylen-Copolymer und/oder Polypropylen Terpolymer modifiziert mit 15 bis 40 Gew.-% mindestens eines Impact Modifiers ausgewählt aus der Gruppe bestehend aus: Styrol-Blockcopolymeren, insbesondere SEBS und/oder SEPS, und/oder Polyethylen-Elastomeren, insbesondere Copolymeren von Ethylen mit mindestens einem alpha-Olefin enthaltend 4 bis 12, bevorzugt 4 bis 8, Kohlenstoffatome;
y) eine zweite Polymerschicht (Y) enthaltend:
Y1) 20 bis 50 Gew.-% mindestens eines Polypropylen-Terpolymers und/oder statistischen Propylen-Ethylen-Copolymers;
Y2) 20 bis 50 Gew.-% mindestens eines Styrol-Blockcopolymer (SBC) Elastomers, bevorzugt SEBS;
Y3) 10 bis 50 Gew.-% mindestens eines Polyethylen-Elastomers, welches ein Copolymer von Ethylen mit einem alpha-Olefin enthaltend 4 bis 12 Kohlenstoffatome und/oder ein Copolymer von Ethylen und einer Carbonylverbindung,(bevorzugt ein Carbonsäureester), ist;
z) eine mittlere Polymerschicht (Z), die sich zwischen der ersten Polymerschicht (X) und der zweiten Polymerschicht (Y) befindet, enthaltend:
Z1) 30 bis 70 Gew.-% mindestens eines Impact Modifiers ausgewählt aus der Gruppe bestehend aus: Styrol-Blockcopolymeren, insbesondere SEBS und/oder SEPS, und/oder Polyethylen-Elastomeren, insbesondere Copolymeren von Ethylen mit mindestens einem alpha-Olefin enthaltend 4 bis 12 Kohlenstoffatome, insbesondere ein Ethylen-Butylen-Copolymer und/oder Ethylen-Octen-Copolymer;
Z2) 30 bis 70 Gew.-% mindestens eines Polypropylen-Terpolymers und/oder statistischen Propylen-Ethylen-Copolymers, bevorzugt eines statistischen Propylen-Ethylen-Copolymers.

15. Verwendung einer Mehrschichtfolie gemäß einem der Ansprüche 1 bis 10 oder eines medizinischen Containers, vorzugsweise eines Beutels, gemäß Anspruch 12 oder 14 für medizinische Lösungen, Blutplasma, Zellen oder organisches Gewebe, insbesondere medizinische Lösungen oder Blutplasma.

## Claims

1. Heat-sterilizable multilayer film, comprising
a) a first polymer layer (A) containing at least one polypropylene homopolymer modified with at least one impact modifier;
b) a second polymer layer (B) containing:
B1) 15 to 45 wt.-% of at least one component B1) selected from the group consisting of: polypropylene terpolymers and polyethylene elastomers which are copolymers of ethylene and an alpha-olefin containing 4 to 12 carbon atoms;
B2) 20 to 30 wt.-% of at least one styrene block copolymer (SBC) elastomer;
B3) 20 to 40 wt.-% of at least one propylene-ethylene (block) copolymer, in which the proportion of the structural units of ethylene is ≥ 9 wt.-%, in many cases 9 to 15 wt.-%;
B4) 15 to 30 wt.-% of at least one component B4) selected from the group consisting of: polybutene-1 plastomers and polyethylene composites having a melting temperature of > 125°C and a density of 945 to 960 kg/m³; and
c) a central polymer layer (C) situated between the first polymer layer (A) and the second polymer layer (B), containing (consisting of):
C1) 20 to 40 wt.-% of at least one styrene block copolymer (SBC) elastomer;
C2) 15 to 30 wt.-% of at least one polyethylene elastomer which is a copolymer of ethylene with an alpha-olefin containing 4 to 12 carbon atoms;
C3) 25 to 50 wt.-% of at least one propylene-ethylene (block) copolymer, in which the proportion of the structural units of ethylene is ≥ 9 wt.-%, in many cases 9 to 15 wt.-%; and
C4) 0 to 20 wt.-% of at least one component C4) selected from the group consisting of: polypropylene terpolymers, random propylene-ethylene copolymers and polybutene-1 plastomers.

2. Heat-sterilizable multilayer film according to claim 1, in which the second polymer layer (B) contains:
B1) 17 to 35 wt.-%, preferably 19 to 30 wt.-%;
B2) 22 to 28 wt.-%, preferably 23 to 27 wt.-%;
B3) 25 to 35 wt.-%, preferably 27 to 33 wt.-%;
B4) 18 to 28 wt.-%, preferably 19 to 26 wt.-%.

3. Heat-sterilizable multilayer film according to claim 1 or 2, in which the central polymer layer (C) contains:
C1) 25 to 40 wt.-%, preferably 30 to 38 wt.-%;
C2) 18 to 30 wt.-%, preferably 20 to 28 wt.-%;
C3) 25 to 45 wt.-%, preferably 25 to 39 wt.-%;
C4) 1 to 15 wt.-%, preferably 3 to 12 wt.-%.

4. Heat-sterilizable multilayer film according to any of claims 1 to 3, in which the polypropylene terpolymer (component B1) and/or C4)) is a terpolymer of propylene, ethylene and a C₄-C₁₂-α-olefin, preferably a terpolymer of propylene, ethylene and butylene.

5. Heat-sterilizable multilayer film according to any of claims 1 to 4, in which the polyethylene elastomer (component B1) and/or C2)) is an ethylene-butylene copolymer and/or an ethylene-1-octene copolymer, in particular an ethylene-1-octene copolymer.

6. Heat-sterilizable multilayer film according to any of claims 1 to 5, in which the styrene block copolymer elastomer (component B2) and/or C1)) is selected from the group consisting of: styrene-ethylene-butylene-styrene block copolymer (SEBS), styrene-ethylene-propylene-styrene block copolymer (SEPS), styrene-ethylene-ethylene-propylene-styrene block copolymer (*SEEPS*)*,* styrene-isoprene-styrene block copolymer (SIS) and styrenebutadiene-styrene block copolymer (SBS), preferably SEBS and SEPS, in particular SEBS.

7. Heat-sterilizable multilayer film according to any of claims 1 to 6, in which the polyethylene composite (component B4)) consists of:
65 to 85 wt.-% of ethylene homopolymer, and
15 to 35 wt.-%, preferably 20 to 30 wt.-%, of at least one ethylene copolymer which contains as comonomer, preferably 25 to 40 wt.-%, of at least one alpha-olefin having 4 to 12 carbon atoms, preferably 1-butene.

8. Heat-sterilizable multilayer film according to claim 7, **characterized in that** the ethylene copolymer is prepared by copolymerization of ethylene and at least one alpha-olefin in the presence of a metallocene catalyst.

9. Heat-sterilizable multilayer film according to any of claims 1 to 8, in which the first polymer layer (A) contains 80 to 95 wt.-%, in particular 85 to 95 wt.-%, of a polypropylene homopolymer and 5 to 20 wt.-%, in particular 5 to 15 wt.-%, of at least one impact modifier selected from the group consisting of: styrene block copolymers, preferably a styrene-ethylene/butylene block copolymer, and/or polyethylene elastomers, in particular copolymers of ethylene with at least one alpha-olefin containing 4 to 12, preferably 4 to 8, carbon atoms.

10. Heat-sterilizable multilayer film according to any of claims 1 to 9, **characterized in that** the multilayer film consists of the polymer layers (A), (B) and (C), and the total film thickness of the multilayer film is 300 to 450 µm, preferably 350 to 400 µm, and the layer thickness of the first polymer layer (A) is 5 to 15 wt.-%, preferably 7 to 13 wt.-%,
the layer thickness of the second polymer layer (B) is 5 to 15 wt.-%, preferably 7 to 13 wt.-%; and
the layer thickness of the central polymer layer (C) is 70 to 85 wt.-%, preferably 74 to 80 wt.-%.

11. Method for producing a multilayer film according to any of claims 1 to 10, wherein the first polymer layer (A), the central polymer layer (C) and the second polymer layer (B) are coextruded.

12. Medical container, in particular medical bag, with or without welded-on port elements and/or tubes, for medical solutions, blood plasma, cells or organic tissue, produced from the multilayer film according to the invention according to any of claims 1 to 10.

13. Method for producing a medical container, preferably a bag, according to claim 12, comprising the steps of:
a) providing at least one heat-sterilizable multilayer film produced according to claim 11;
b) optionally providing one or more port elements and/or tubes;
c) shaping a medical container, preferably a bag, from the at least one heat-sterilizable multilayer film, such that the second polymer layer (B) forms the inner face of the medical container, preferably the bag, and the first polymer layer (A) forms the outer face of the medical container, preferably the bag;
d) optionally positioning the port elements and/or tubes between the inner faces at the contours of the medical container, preferably the bag;
e) contacting the inner faces with one another and with port elements and/or tubes optionally positioned in between at the contours of the medical container, preferably the bag;
f) heat-sealing the inner faces with one another and with port elements and/or tubes optionally positioned in between at the contours of the medical container, preferably the bag.

14. Medical container, in particular medical bag, with welded-on port elements and/or tubes according to claim 12, **characterized in that** the port elements and/or tubes are composed of a multilayer tube containing:
x) a first polymer layer (X) containing at least one random propylene-ethylene copolymer and/or polypropylene terpolymer modified with at least one impact modifier; preferably at least one random propylene-ethylene copolymer and/or polypropylene terpolymer modified with 15 to 40 wt.-% of at least one impact modifier selected from the group consisting of: styrene block copolymers, in particular SEBS and/or SEPS, and/or polyethylene elastomers, in particular copolymers of ethylene with at least one alpha-olefin containing 4 to 12, preferably 4 to 8, carbon atoms;
y) a second polymer layer (Y) containing:
Y1) 20 to 50 wt.-% of at least one polypropylene terpolymer and/or random propylene-ethylene copolymer;
Y2) 20 to 50 wt.-% of at least one styrene block copolymer (SBC) elastomer, preferably SEBS;
Y3) 10 to 50 wt.-% of at least one polyethylene elastomer which is a copolymer of ethylene with an alpha-olefin containing 4 to 12 carbon atoms and/or is a copolymer of ethylene and a carbonyl compound (preferably a carboxylic ester);
z) a central polymer layer (Z) situated between the first polymer layer (X) and the second polymer layer (Y) and containing:
Z1) 30 to 70 wt.-% of at least one impact modifier selected from the group consisting of: styrene block copolymers, in particular SEBS and/or SEPS, and/or polyethylene elastomers, in particular copolymers of ethylene with at least one alpha-olefin containing 4 to 12 carbon atoms, in particular an ethylene-butylene copolymer and/or ethylene-octene copolymer;
Z2) 30 to 70 wt.-% of at least one polypropylene terpolymer and/or random propylene-ethylene copolymer, preferably a random propylene-ethylene copolymer.

15. Use of a multilayer film according to any of claims 1 to 10 or of a medical container, preferably a bag, according to claim 12 or 14 for medical solutions, blood plasma, cells or organic tissue, in particular medical solutions or blood plasma.

## Revendications

1. Feuille multicouche stérilisable à la chaleur, comprenant
a) une première couche polymère (A) contenant au moins un homopolymère de polypropylène modifié par un modificateur d'impact ;
b) une deuxième couche polymère (B) contenant :
B1) 15 à 45% en poids d'au moins un composant B1), choisi dans le groupe constitué par : les terpolymères de polypropylène et les élastomères de polyéthylène, qui sont des copolymères d'éthylène et d'une alpha-oléfine contenant 4 à 12 atomes de carbone ;
B2) 20 à 30% en poids d'au moins un élastomère de type copolymère séquencé de styrène (SBC) ;
B3) 20 à 40% en poids d'au moins un copolymère (séquencé) de propylène-éthylène, dans lequel la proportion de motifs structuraux d'éthylène est ≥ 9% en poids, souvent de 9 à 15% en poids ;
B4) 15 à 30% en poids d'au moins un composant B4), choisi dans le groupe constitué par : les plastomères de polybutène-1 et les composites de polyéthylène présentant une température de fusion > 125°C et une masse volumique de 945 à 960 kg/m³ ; et
c) une couche polymère centrale (C), qui se situe entre la première couche polymère (A) et la deuxième couche polymère (B), contenant (constituée par) :
C1) 20 à 40% en poids d'au moins un élastomère de type copolymère séquencé de styrène (SBC) ;
C2) 15 à 30% en poids d'au moins un élastomère de polyéthylène, qui est un copolymère d'éthylène et d'une alpha-oléfine contenant 4 à 12 atomes de carbone ;
C3) 25 à 50% en poids d'au moins un copolymère (séquencé) de propylène-éthylène, dans lequel la proportion de motifs structuraux d'éthylène est ≥ 9% en poids, souvent de 9 à 15% en poids ; et
C4) 0 à 20% en poids d'au moins un composant C4), choisi dans le groupe constitué par : les terpolymères de polypropylène, les copolymères statistiques de propylène-éthylène et les plastomères de polybutène-1.

2. Feuille multicouche stérilisable à la chaleur selon la revendication 1, dans laquelle la deuxième couche polymère (B) contient :
B1) 17 à 35% en poids, de préférence 19 à 30% en poids ;
B2) 22 à 28% en poids, de préférence 23 à 27% en poids ;
B3) 25 à 35% en poids, de préférence 27 à 33% en poids ;
B4) 18 à 28% en poids, de préférence 19 à 26% en poids.

3. Feuille multicouche stérilisable à la chaleur selon la revendication 1 ou 2, dans laquelle la couche polymère centrale (C) contient :
C1) 25 à 40% en poids, de préférence 30 à 38% en poids ;
C2) 18 à 30% en poids, de préférence 20 à 28% en poids ;
C3) 25 à 45% en poids, de préférence 25 à 39% en poids ;
C4) 1 à 15% en poids, de préférence 3 à 12% en poids.

4. Feuille multicouche stérilisable à la chaleur selon l'une des revendications 1 à 3, dans laquelle le terpolymère de polypropylène (composant B1) et/ou C4)) est un terpolymère de propylène, d'éthylène et d'une C₄-C₁₂-α-oléfine, de préférence un terpolymère de propylène, d'éthylène et de butylène.

5. Feuille multicouche stérilisable à la chaleur selon l'une des revendications 1 à 4, dans laquelle l'élastomère de polyéthylène (composant B1) et/ou C2)) est un copolymère d'éthylène-butylène et/ou un copolymère d'éthylène-1-octène, en particulier un copolymère d'éthylène-1-octène.

6. Feuille multicouche stérilisable à la chaleur selon l'une des revendications 1 à 5, dans laquelle l'élastomère de type copolymère séquencé de styrène (composant B2) et/ou C1)) est choisi dans le groupe constitué par : un copolymère séquencé de styrène-éthylène-butylène-styrène (SEBS), un copolymère séquencé de styrène-éthylène-propylène-styrène (SEPS), un copolymère séquencé de styrène-éthylène-éthylène-propylène-styrène (SEEPS), un copolymère séquencé de styrène-isoprène-styrène (SIS) et un copolymère séquencé de styrène-butadiène-styrène (SBS), de préférence le SEBS et le SEPS, en particulier le SEBS.

7. Feuille multicouche stérilisable à la chaleur selon l'une des revendications 1 à 6, dans laquelle le composite de polyéthylène (composant B4)) est constitué par :
65 à 85% en poids d'homopolymère d'éthylène et
15 à 35% en poids, de préférence 20 à 30% en poids, d'au moins un copolymère d'éthylène, qui contient comme comonomère, de préférence à raison de 25 à 40% en poids, au moins une alpha-oléfine comprenant 4 à 12 atomes de carbone, de préférence le 1-butène.

8. Feuille multicouche stérilisable à la chaleur selon la revendication 7, **caractérisée en ce que** le copolymère d'éthylène est préparé par copolymérisation d'éthylène et d'au moins une alpha-oléfine en présence d'un catalyseur de type métallocène.

9. Feuille multicouche stérilisable à la chaleur selon l'une des revendications 1 à 8, dans laquelle la première couche polymère (A) contient 80 à 95% en poids, en particulier 85 à 95% en poids, d'un homopolymère de polypropylène et 5 à 20% en poids, en particulier 5 à 15% en poids, d'au moins un modificateur d'impact choisi dans le groupe constitué par : les copolymères séquences de styrène, de préférence un copolymère séquencé de styrène-éthylène/butylène et/ou les élastomères de polyéthylène, en particulier les copolymères d'éthylène et d'au moins une alpha-oléfine contenant 4 à 12, de préférence 4 à 8, atomes de carbone.

10. Feuille multicouche stérilisable à la chaleur selon l'une des revendications 1 à 9, **caractérisée en ce que** la feuille multicouche est constituée par les couches polymères (A), (B) et (C) et l'épaisseur totale de feuille de la feuille multicouche représente 300 à 450 µm, de préférence 350 à 400 µm, et l'épaisseur de couche de la première couche polymère (A) représente 5 à 15% en poids, de préférence 7 à 13% en poids,
l'épaisseur de couche de la deuxième couche polymère (B) représente 5 à 15% en poids, de préférence 7 à 13% en poids ; et
l'épaisseur de couche de la couche polymère centrale (C) représente 70 à 85% en poids, de préférence 74 à 80% en poids.

11. Procédé de préparation d'une feuille multicouche selon l'une des revendications 1 à 10, la première couche polymère (A), la couche polymère centrale (C) et la deuxième couche polymère (B) étant coextrudées.

12. Récipient médical, en particulier poche médicale, présentant le cas échéant des éléments de port et/ou des tuyaux flexibles soudés, destiné à des solutions médicales, du plasma sanguin, des cellules ou du tissu organique, fabriqué à partir de la feuille multicouche selon l'invention selon l'une des revendications 1 à 10.

13. Procédé de fabrication d'un récipient médical, de préférence d'une poche, selon la revendication 12, comprenant les étapes de :
a) mise à disposition d'au moins une feuille multicouche stérilisable à la chaleur préparée selon la revendication 11 ;
b) le cas échéant mise à disposition d'un ou de plusieurs éléments de port et/ou tuyaux flexibles ;
c) formation d'un récipient médical, de préférence d'une poche, à partir de ladite au moins une feuille multicouche stérilisable à la chaleur, de telle sorte que la deuxième couche polymère (B) forme la surface interne du récipient médical, de préférence de la poche, et la première couche polymère (A) forme la surface externe du récipient médical, de préférence de la poche ;
d) le cas échéant positionnement des éléments de port et/ou des tuyaux flexibles entre les surfaces internes au niveau des contours du récipient médical, de préférence de la poche ;
e) mise en contact des surfaces internes au niveau des contours du récipient médical, de préférence de la poche, les unes avec les autres et le cas échéant avec les éléments de port et/ou les tuyaux flexibles positionnés entre elles ;
f) soudage des surfaces internes au niveau des contours du récipient médical, de préférence de la poche, les unes avec les autres et le cas échéant avec les éléments de port et/ou les tuyaux flexibles positionnés entre elles.

14. Récipient médical, en particulier poche médicale, présentant des éléments de port et/ou des tuyaux flexibles soudés, selon la revendication 12, **caractérisé en ce que** les éléments de port et/ou les tuyaux flexibles sont constitués par un tuyau flexible multicouche, contenant :
x) une première couche polymère (X) contenant au moins un copolymère statistique de propylène-éthylène et/ou un terpolymère de polypropylène modifié(s) par un modificateur d'impact ; de préférence au moins un copolymère statistique de propylène-éthylène et/ou un terpolymère de polypropylène modifié(s) par 15 à 40% en poids d'au moins un modificateur d'impact choisi dans le groupe constitué par : les copolymères séquencés de styrène, en particulier le SEBS et/ou le SEPS, et/ou les élastomères de polyéthylène, en particulier les copolymères d'éthylène et d'au moins une alpha-oléfine contenant 4 à 12, de préférence 4 à 8, atomes de carbone ;
y) une deuxième couche polymère (Y) contenant :
Y1) 20 à 50% en poids d'au moins un terpolymère de polypropylène et/ou un copolymère statistique de propylène-éthylène ;
Y2) 20 à 50% en poids d'au moins un élastomère de type copolymère séquencé de styrène, de préférence le SEBS ;
Y3) 10 à 50% en poids d'au moins un élastomère de polyéthylène, qui est un copolymère d'éthylène et d'une alpha-oléfine contenant 4 à 12 atomes de carbone et/ou un copolymère d'éthylène et d'un composé carbonyle (de préférence un ester d'acide carboxylique) ;
z) une couche polymère centrale (Z), qui se situe entre la première couche polymère (X) et la deuxième couche polymère (Y), contenant :
Z1) 30 à 70% en poids d'au moins un modificateur d'impact choisi dans le groupe constitué par : les copolymères séquencés de styrène, en particulier le SEBS et/ou le SEPS, et/ou les élastomères de polyéthylène, en particulier les copolymères d'éthylène et d'au moins une alpha-oléfine contenant 4 à 12 atomes de carbone, en particulier un copolymère d'éthylène-butylène et/ou un copolymère d'éthylène-octène ;
Z2) 30 à 70% en poids d'au moins un terpolymère de polypropylène et/ou un copolymère statistique de propylène-éthylène, de préférence un copolymère statistique de propylène-éthylène.

15. Utilisation d'une feuille multicouche selon l'une des revendications 1 à 10 ou d'un récipient médical, de préférence d'une poche, selon la revendication 12 ou 14 pour des solutions médicales, du plasma sanguin, des cellules ou du tissu organique, de préférence des solutions médicales ou du plasma sanguin.
